# EUROPEAN PATENT APPLICATION

(11) **EP 4 765 043 A1**
(43) Date of publication of application: **24.06.2026**
(21) Application number: 25224711.9
(22) Date of filing: 17.12.2025
(51) Int. Cl.: G06V 10/82, G06V 10/94, G06V 20/56, G06V 20/59

(54) **IMAGE SENSORS WITH ON-SENSOR AND APPLICATION-SPECIFIC OBJECT IDENTIFICATION**

(30) Priority: 18.12.2024 US 202418986427
(71) Applicant: Waymo LLC, Mountain View, CA 94043 (US)
(72) Inventor: DHARIA, Nirav Shailesh Kumar, Mountain View, CA 94043 (US); KIM, Erik Daniel, Mountain View, CA 94043 (US)
(74) Representative: Chettle, John Edward

(57) **Abstract**

Example embodiments relate to image sensors with on-sensor and application-specific object identification. An example embodiment includes a method. The method includes capturing, by an image sensor, image data about a surrounding environment. The method also includes receiving, by an analog-to-digital converter (ADC), the captured image data from the image sensor. The method further includes providing, by the ADC, converted image data to an application-specific integrated circuit (ASIC). The method further includes applying, by the ASIC, a trained machine-learning model to the converted image data to identify one or more objects in the surrounding environment within the converted image data. The method further includes outputting, by the ASIC, an image frame, wherein at least one row of the image frame comprises metadata including object classification data and object location data for the one or more identified objects in the surrounding environment.

## Description

### BACKGROUND

Unless otherwise indicated herein, the description in this section is not prior art to the claims in this application and is not admitted to be prior art by inclusion in this section.

Computer vision tasks, especially those related to the operation of autonomous or semi-autonomous vehicles, are often computationally intensive. In this specific case, computer systems often process high frame rate data from cameras and other sensors in order to identify objects in the surrounding environment of the vehicle, such as other vehicles, traffic signals and signs, pedestrians, cyclists, and debris in the roadway.

### SUMMARY

This disclosure relates to image sensors with on-sensor and application-specific object identification. In contrast to alternative methods, example embodiments herein allow for the offloading of computer vision tasks from centralized general-purpose processors to application-specific processors coupled directly to sensors. This allows for greater customization and configuration of the processors for tasks associated with each sensor. For example, the application-specific processors may apply a trained machine-learning model to image data received from the sensors in order to identify objects for navigation of the autonomous or semi-autonomous vehicle.

In one aspect, a system is provided. The system includes a vehicle, a first device attached to the vehicle and along a first orientation relative to the vehicle, and a second device attached to the vehicle and along a second orientation relative to the vehicle. The first orientation and the second orientation are different. The first device includes a first image sensor configured to capture first image data about a surrounding environment, a first analog-to-digital converter (ADC) configured to receive the captured first image data from the first image sensor and provide converted first image data, and a first application-specific integrated circuit (ASIC). The first ASIC is configured to receive the converted first image data from the first ADC and apply a first trained machine-learning model to the converted first image data to identify one or more first objects in the surrounding environment within the converted first image data. The first trained machine-learning model is selected from a plurality of machine-learning models based on the first orientation. The second device includes a second image sensor configured to capture second image data about the surrounding environment, a second ADC configured to receive the captured second image data from the second image sensor and provide converted second image data, and a second ASIC. The second ASIC is configured to receive the converted second image data from the second ADC and apply a second trained machine-learning model to the converted second image data to identify one or more second objects in the surrounding environment within the converted second image data. The second trained machine-learning model is selected from the plurality of machine-learning models based on the second orientation.

In another aspect, a device is provided. The device includes an image sensor configured to capture image data about a surrounding environment, an analog-to-digital converter (ADC) configured to receive the captured image data from the image sensor and provide converted image data, and an application-specific integrated circuit (ASIC). The ASIC is configured to receive the converted image data from the ADC, apply a trained machine-learning model to the converted image data to identify one or more objects in the surrounding environment within the converted image data, and output an image frame. At least one row of the image frame includes metadata including object classification data and object location data for the one or more identified objects in the surrounding environment.

In another aspect, a method is provided. The method includes capturing, by an image sensor, image data about a surrounding environment. The method also includes receiving, by an analog-to-digital converter (ADC), the captured image data from the image sensor. The method further includes providing, by the ADC, converted image data to an application-specific integrated circuit (ASIC). The method further includes applying, by the ASIC, a trained machine-learning model to the converted image data to identify one or more objects in the surrounding environment within the converted image data. The method further includes outputting, by the ASIC, an image frame. At least one row of the image frame includes metadata including object classification data and object location data for the one or more identified objects in the surrounding environment.

These as well as other aspects, advantages, and alternatives will become apparent to those of ordinary skill in the art by reading the following detailed description, with reference, where appropriate, to the accompanying drawings.

### BRIEF DESCRIPTION OF THE DRAWINGS

Figure 1 is a functional block diagram illustrating a vehicle, according to example embodiments.
Figure 2A is an illustration of a physical configuration of a vehicle, according to example embodiments.
Figure 2B is an illustration of a physical configuration of a vehicle, according to example embodiments.
Figure 2C is an illustration of a physical configuration of a vehicle, according to example embodiments.
Figure 2D is an illustration of a physical configuration of a vehicle, according to example embodiments.
Figure 2E is an illustration of a physical configuration of a vehicle, according to example embodiments.
Figure 2F is an illustration of a physical configuration of a vehicle, according to example embodiments.
Figure 2G is an illustration of a physical configuration of a vehicle, according to example embodiments.
Figure 2H is an illustration of a physical configuration of a vehicle, according to example embodiments.
Figure 2I is an illustration of a physical configuration of a vehicle, according to example embodiments.
Figure 2J is an illustration of a field of view for various sensors, according to example embodiments.
Figure 2K is an illustration of beam steering for a sensor, according to example embodiments.
Figure 3 is a conceptual illustration of wireless communication between various computing systems related to an autonomous or semi-autonomous vehicle, according to example embodiments.
Figure 4A is a block diagram of a system including a lidar device, according to example embodiments.
Figure 4B is a block diagram of a lidar device, according to example embodiments.
Figure 5A is a block diagram of a device, according to example embodiments.
Figure 5B is an illustration of a multilayer die stack, according to example embodiments.
Figure 5C is an illustration of a vehicle with devices, according to example embodiments.
Figure 6A is a block diagram of a process, according to example embodiments.
Figure 6B is a block diagram of an image frame, according to example embodiments.
Figure 7A is an illustration of an image frame, according to example embodiments.
Figure 7B is an illustration of an image frame including metadata, according to example embodiments.
Figure 7C is an illustration of an image frame, according to example embodiments.
Figure 7D is an illustration of an image frame including metadata, according to example embodiments.
Figure 8 is a flowchart illustration of a method, according to example embodiments.
Figure 9 is a flowchart illustration of a method, according to example embodiments.

### DETAILED DESCRIPTION

Example methods and systems are contemplated herein. Any example embodiment or feature described herein is not necessarily to be construed as preferred or advantageous over other embodiments or features. Further, the example embodiments described herein are not meant to be limiting. It will be readily understood that certain aspects of the disclosed systems and methods can be arranged and combined in a wide variety of different configurations, all of which are contemplated herein. In addition, the particular arrangements shown in the figures should not be viewed as limiting. It should be understood that other embodiments might include more or less of each element shown in a given figure. Additionally, some of the illustrated elements may be combined or omitted. Yet further, an example embodiment may include elements that are not illustrated in the figures.

Lidar devices as described herein can include one or more light emitters and one or more detectors used for detecting light that is emitted by the one or more light emitters and reflected by one or more objects in an environment surrounding the lidar device. As an example, the surrounding environment could include an interior or exterior environment, such as an inside of a building or an outside of a building. Additionally or alternatively, the surrounding environment could include an interior of a vehicle. Still further, the surrounding environment could include a vicinity around and/or on a roadway. Examples of objects in the surrounding environment include, but are not limited to, other vehicles, traffic signs, pedestrians, bicyclists, roadway surfaces, buildings, and terrain. Additionally, the one or more light emitters could emit light into a local environment of the lidar itself. For example, light emitted from the one or more light emitters could interact with a housing of the lidar and/or surfaces or structures coupled to the lidar. In some cases, the lidar could be mounted to a vehicle, in which case the one or more light emitters could be configured to emit light that interacts with objects within a vicinity of the vehicle. Further, the light emitters could include optical fiber amplifiers, laser diodes, light-emitting diodes (LEDs), among other possibilities.

As noted above, In some embodiments, the application-specific task may vary based on the positioning of the sensor device with regards to its location and/or orientation on an autonomous or semi-autonomous vehicle, and such a determination may occur automatically. For example, a sensor device may determine that it is positioned in a forward-facing location on an autonomous vehicle, and automatically load the appropriate machine-learning model. This allows for flexibility in adapting sensors to different tasks, and allows for streamlined updates to the machine-learning models based on the preferences of the developer and/or deployer.

The embodiments herein also provide a technical improvement over current methods, as detection performed by the sensors would usually be performed by a central processing unit or system, which adds latency to the object-detection data flow, as the image data would be transmitted to the central processing system before any analysis is performed.

In light of the problem described above, the embodiments herein allow for computer vision tasks to be performed onboard sensor devices, offloading the processing tasks from central processing units. Accordingly, a sensor device as described herein may include an image sensor, an analog-to-digital converter (ADC), and an application-specific integrated circuit (ASIC). Image data may be collected by the image sensor, converted to a digital format by the ADC, and transmitted to the ASIC, which may then detect objects in the surrounding environment of the autonomous vehicle using a trained machine-learning model. This provides a technical improvement over current methods, as such detection would be performed by a central processing unit or system, which is often located away from the image capture device, which adds latency to the object-detection data flow, as the image data would be transmitted to the central processing system before any analysis is performed. Further, the central processing unit or system may also serve multiple image capture devices, further limiting the resources it is able to devote to each. In contrast, the device described above performs the analysis and other computer vision tasks, greatly improving performance. This also allows for the central processing system to devote more resources to autonomous driving logic. Additionally, by co-locating the processing components in the same device as the image sensor, this allows for lower latency and communication overhead in transmissions between each of the components.

In some embodiments, the device may include three layers in a multilayer die stack: (i) an image-sensing layer (the image sensor), (ii) an ADC layer (including the ADC, HDR processors, and cache), and (iii) a processing layer, including the ASIC.

The following description and accompanying drawings will elucidate features of various example embodiments. The embodiments provided are by way of example, and are not intended to be limiting. As such, the dimensions of the drawings are not necessarily to scale.

Example systems within the scope of the present disclosure will now be described in greater detail. An example system may be implemented in or may take the form of an automobile. Additionally, an example system may also be implemented in or take the form of various vehicles, such as cars, trucks (e.g., pickup trucks, vans, tractors, and tractor trailers), motorcycles, buses, airplanes, helicopters, drones, lawn mowers, earth movers, boats, submarines, all-terrain vehicles, snowmobiles, aircraft, recreational vehicles, amusement park vehicles, farm equipment or vehicles, construction equipment or vehicles, warehouse equipment or vehicles, factory equipment or vehicles, trams, golf carts, trains, trolleys, sidewalk delivery vehicles, and robot devices. Other vehicles are possible as well. Further, in some embodiments, example systems might not include a vehicle.

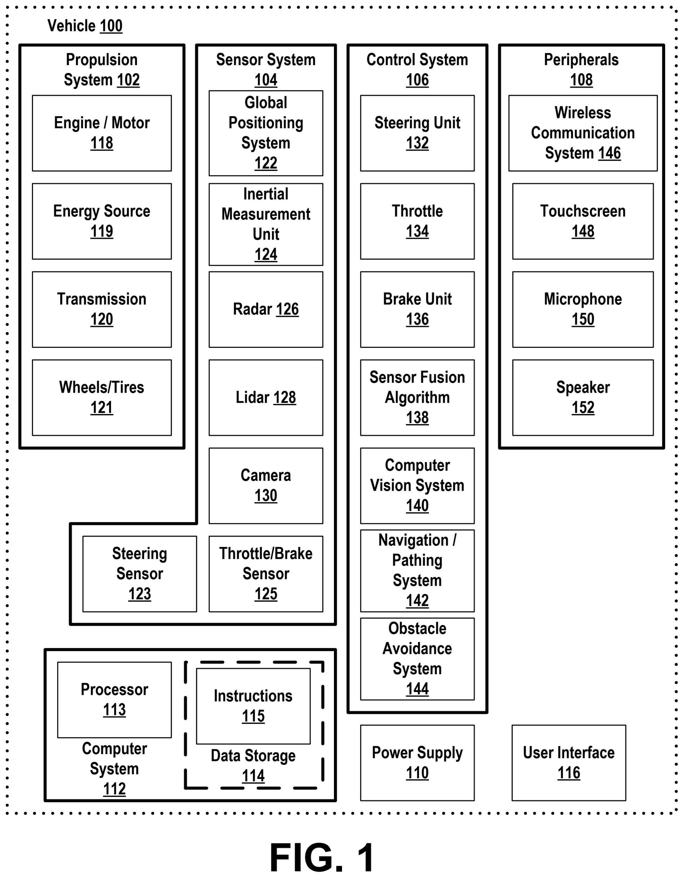

Referring now to the figures, Figure 1 is a functional block diagram illustrating example vehicle 100, which may be configured to operate fully or partially in an autonomous mode. More specifically, vehicle 100 may operate in an autonomous mode without human interaction through receiving control instructions from a computing system. As part of operating in the autonomous mode, vehicle 100 may use sensors to detect and possibly identify objects of the surrounding environment to enable safe navigation. Additionally, example vehicle 100 may operate in a partially autonomous (i.e., semi-autonomous) mode in which some functions of the vehicle 100 are controlled by a human driver of the vehicle 100 and some functions of the vehicle 100 are controlled by the computing system. For example, vehicle 100 may also include subsystems that enable the driver to control operations of vehicle 100 such as steering, acceleration, and braking, while the computing system performs assistive functions such as lane-departure warnings / lane-keeping assist or adaptive cruise control based on other objects (e.g., vehicles) in the surrounding environment.

As described herein, in a partially autonomous driving mode, even though the vehicle assists with one or more driving operations (e.g., steering, braking and/or accelerating to perform lane centering, adaptive cruise control, advanced driver assistance systems (ADAS), and emergency braking), the human driver is expected to be situationally aware of the vehicle's surroundings and supervise the assisted driving operations. Here, even though the vehicle may perform all driving tasks in certain situations, the human driver is expected to be responsible for taking control as needed.

Although, for brevity and conciseness, various systems and methods are described below in conjunction with autonomous vehicles, these or similar systems and methods can be used in various driver assistance systems that do not rise to the level of fully autonomous driving systems (i.e. partially autonomous driving systems). In the United States, the Society of Automotive Engineers (SAE) have defined different levels of automated driving operations to indicate how much, or how little, a vehicle controls the driving, although different organizations, in the United States or in other countries, may categorize the levels differently. More specifically, the disclosed systems and methods can be used in SAE Level 2 driver assistance systems that implement steering, braking, acceleration, lane centering, adaptive cruise control, etc., as well as other driver support. The disclosed systems and methods can be used in SAE Level 3 driving assistance systems capable of autonomous driving under limited (e.g., highway) conditions. Likewise, the disclosed systems and methods can be used in vehicles that use SAE Level 4 self-driving systems that operate autonomously under most regular driving situations and require only occasional attention of the human operator. In all such systems, accurate lane estimation can be performed automatically without a driver input or control (e.g., while the vehicle is in motion) and result in improved reliability of vehicle positioning and navigation and the overall safety of autonomous, semi-autonomous, and other driver assistance systems. As previously noted, in addition to the way in which SAE categorizes levels of automated driving operations, other organizations, in the United States or in other countries, may categorize levels of automated driving operations differently. Without limitation, the disclosed systems and methods herein can be used in driving assistance systems defined by these other organizations' levels of automated driving operations.

As shown in Figure 1, vehicle 100 may include various subsystems, such as propulsion system 102, sensor system 104, control system 106, one or more peripherals 108, power supply 110, computer system 112 (which could also be referred to as a computing system) with data storage 114, and user interface 116. In other examples, vehicle 100 may include more or fewer subsystems, which can each include multiple elements. The subsystems and components of vehicle 100 may be interconnected in various ways. In addition, functions of vehicle 100 described herein can be divided into additional functional or physical components, or combined into fewer functional or physical components within embodiments. For instance, the control system 106 and the computer system 112 may be combined into a single system that operates the vehicle 100 in accordance with various operations.

Propulsion system 102 may include one or more components operable to provide powered motion for vehicle 100 and can include an engine/motor 118, an energy source 119, a transmission 120, and wheels/tires 121, among other possible components. For example, engine/motor 118 may be configured to convert energy source 119 into mechanical energy and can correspond to one or a combination of an internal combustion engine, an electric motor, steam engine, or Stirling engine, among other possible options. For instance, in some embodiments, propulsion system 102 may include multiple types of engines and/or motors, such as a gasoline engine and an electric motor.

Energy source 119 represents a source of energy that may, in full or in part, power one or more systems of vehicle 100 (e.g., engine/motor 118). For instance, energy source 119 can correspond to gasoline, diesel, other petroleum-based fuels, propane, other compressed gas-based fuels, ethanol, solar panels, batteries, and/or other sources of electrical power. In some embodiments, energy source 119 may include a combination of fuel tanks, batteries, capacitors, and/or flywheels.

Transmission 120 may transmit mechanical power from engine/motor 118 to wheels/tires 121 and/or other possible systems of vehicle 100. As such, transmission 120 may include a gearbox, a clutch, a differential, and a drive shaft, among other possible components. A drive shaft may include axles that connect to one or more wheels/tires 121.

Wheels/tires 121 of vehicle 100 may have various configurations within example embodiments. For instance, vehicle 100 may exist in a unicycle, bicycle/motorcycle, tricycle, or car/truck four-wheel format, among other possible configurations. As such, wheels/tires 121 may connect to vehicle 100 in various ways and can exist in different materials, such as metal and rubber.

Sensor system 104 can include various types of sensors, such as Global Positioning System (GPS) 122, inertial measurement unit (IMU) 124, radar 126, lidar 128, camera 130, steering sensor 123, and throttle/brake sensor 125, among other possible sensors. In some embodiments, sensor system 104 may also include sensors configured to monitor internal systems of the vehicle 100 (e.g., O₂ monitor, fuel gauge, engine oil temperature, and brake wear).

GPS 122 may include a transceiver operable to provide information regarding the position of vehicle 100 with respect to the Earth. IMU 124 may have a configuration that uses one or more accelerometers and/or gyroscopes and may sense position and orientation changes of vehicle 100 based on inertial acceleration. For example, IMU 124 may detect a pitch and yaw of the vehicle 100 while vehicle 100 is stationary or in motion.

Radar 126 may represent one or more systems configured to use radio signals to sense objects, including the speed and heading of the objects, within the surrounding environment of vehicle 100. As such, radar 126 may include antennas configured to transmit and receive radio signals. In some embodiments, radar 126 may correspond to a mountable radar configured to obtain measurements of the surrounding environment of vehicle 100.

Lidar 128 may include one or more laser sources, a laser scanner, and one or more detectors, among other system components, and may operate in a coherent mode (e.g., using heterodyne detection) or in an incoherent detection mode (i.e., time-of-flight mode). In some embodiments, the one or more detectors of the lidar 128 may include one or more photodetectors, which may be especially sensitive detectors (e.g., avalanche photodiodes). In some examples, such photodetectors may be capable of detecting single photons (e.g., single-photon avalanche diodes (SPADs)). Further, such photodetectors can be arranged (e.g., through an electrical connection in series) into an array (e.g., as in a silicon photomultiplier (SiPM)). In some examples, the one or more photodetectors are Geiger-mode operated devices and the lidar includes subcomponents designed for such Geiger-mode operation.

Camera 130 may include one or more devices (e.g., still camera, video camera, a thermal imaging camera, a stereo camera, and a night vision camera) configured to capture images of the surrounding environment of vehicle 100.

Steering sensor 123 may sense a steering angle of vehicle 100, which may involve measuring an angle of the steering wheel or measuring an electrical signal representative of the angle of the steering wheel. In some embodiments, steering sensor 123 may measure an angle of the wheels of the vehicle 100, such as detecting an angle of the wheels with respect to a forward axis of the vehicle 100. Steering sensor 123 may also be configured to measure a combination (or a subset) of the angle of the steering wheel, electrical signal representing the angle of the steering wheel, and the angle of the wheels of vehicle 100.

Throttle/brake sensor 125 may detect the position of either the throttle position or brake position of vehicle 100. For instance, throttle/brake sensor 125 may measure the angle of both the gas pedal (throttle) and brake pedal or may measure an electrical signal that could represent, for instance, an angle of a gas pedal (throttle) and/or an angle of a brake pedal. Throttle/brake sensor 125 may also measure an angle of a throttle body of vehicle 100, which may include part of the physical mechanism that provides modulation of energy source 119 to engine/motor 118 (e.g., a butterfly valve and a carburetor). Additionally, throttle/brake sensor 125 may measure a pressure of one or more brake pads on a rotor of vehicle 100 or a combination (or a subset) of the angle of the gas pedal (throttle) and brake pedal, electrical signal representing the angle of the gas pedal (throttle) and brake pedal, the angle of the throttle body, and the pressure that at least one brake pad is applying to a rotor of vehicle 100. In other embodiments, throttle/brake sensor 125 may be configured to measure a pressure applied to a pedal of the vehicle, such as a throttle or brake pedal.

Control system 106 may include components configured to assist in navigating vehicle 100, such as steering unit 132, throttle 134, brake unit 136, sensor fusion algorithm 138, computer vision system 140, navigation/pathing system 142, and obstacle avoidance system 144. More specifically, steering unit 132 may be operable to adjust the heading of vehicle 100, and throttle 134 may control the operating speed of engine/motor 118 to control the acceleration of vehicle 100. Brake unit 136 may decelerate vehicle 100, which may involve using friction to decelerate wheels/tires 121. In some embodiments, brake unit 136 may convert kinetic energy of wheels/tires 121 to electric current for subsequent use by a system or systems of vehicle 100.

Sensor fusion algorithm 138 may include a Kalman filter, Bayesian network, or other algorithms that can process data from sensor system 104. In some embodiments, sensor fusion algorithm 138 may provide assessments based on incoming sensor data, such as evaluations of individual objects and/or features, evaluations of a particular situation, and/or evaluations of potential impacts within a given situation.

Computer vision system 140 may include hardware and software (e.g., a general purpose processor such as a central processing unit (CPU), a specialized processor such as a graphical processing unit (GPU) or a tensor processing unit (TPU), an application-specific integrated circuit (ASIC), a field programmable gate array (FPGA), a volatile memory, a non-volatile memory, or one or more machine-learned models) operable to process and analyze images in an effort to determine objects that are in motion (e.g., other vehicles, pedestrians, bicyclists, or animals) and objects that are not in motion (e.g., traffic lights, roadway boundaries, speedbumps, or potholes). As such, computer vision system 140 may use object recognition, Structure From Motion (SFM), video tracking, and other algorithms used in computer vision, for instance, to recognize objects, map an environment, track objects, estimate the speed of objects, etc.

Navigation/pathing system 142 may determine a driving path for vehicle 100, which may involve dynamically adjusting navigation during operation. As such, navigation/pathing system 142 may use data from sensor fusion algorithm 138, GPS 122, and maps, among other sources to navigate vehicle 100. Obstacle avoidance system 144 may evaluate potential obstacles based on sensor data and cause systems of vehicle 100 to avoid or otherwise negotiate the potential obstacles.

As shown in Figure 1, vehicle 100 may also include peripherals 108, such as wireless communication system 146, touchscreen 148, interior microphone 150, and/or speaker 152. Peripherals 108 may provide controls or other elements for a user to interact with user interface 116. For example, touchscreen 148 may provide information to users of vehicle 100. User interface 116 may also accept input from the user via touchscreen 148. Peripherals 108 may also enable vehicle 100 to communicate with devices, such as other vehicle devices.

Wireless communication system 146 may wirelessly communicate with one or more devices directly or via a communication network. For example, wireless communication system 146 could use 3G cellular communication, such as code-division multiple access (CDMA), evolution-data optimized (EVDO), global system for mobile communications (GSM) / general packet radio service (GPRS), or cellular communication, such as 4G worldwide interoperability for microwave access (WiMAX) or long-term evolution (LTE), or 5G. Alternatively, wireless communication system 146 may communicate with a wireless local area network (WLAN) using WIFI^{®} or other possible connections. Wireless communication system 146 may also communicate directly with a device using an infrared link, Bluetooth, or ZigBee, for example. Other wireless protocols, such as various vehicular communication systems, are possible within the context of the disclosure. For example, wireless communication system 146 may include one or more dedicated short-range communications (DSRC) devices that could include public and/or private data communications between vehicles and/or roadside stations.

Vehicle 100 may include power supply 110 for powering components. Power supply 110 may include a rechargeable lithium-ion or lead-acid battery in some embodiments. For instance, power supply 110 may include one or more batteries configured to provide electrical power. Vehicle 100 may also use other types of power supplies. In an example embodiment, power supply 110 and energy source 119 may be integrated into a single energy source.

Vehicle 100 may also include computer system 112 to perform operations, such as operations described therein. As such, computer system 112 may include at least one processor 113 (which could include at least one microprocessor) operable to execute instructions 115 stored in a non-transitory, computer-readable medium, such as data storage 114. In some embodiments, computer system 112 may represent a plurality of computing devices that may serve to control individual components or subsystems of vehicle 100 in a distributed fashion.

In some embodiments, data storage 114 may contain instructions 115 (e.g., program logic) executable by processor 113 to execute various functions of vehicle 100, including those described above in connection with Figure 1. Data storage 114 may contain additional instructions as well, including instructions to transmit data to, receive data from, interact with, and/or control one or more of propulsion system 102, sensor system 104, control system 106, and peripherals 108.

In addition to instructions 115, data storage 114 may store data such as roadway maps, path information, among other information. Such information may be used by vehicle 100 and computer system 112 during the operation of vehicle 100 in the autonomous, semi-autonomous, and/or manual modes.

Vehicle 100 may include user interface 116 for providing information to or receiving input from a user of vehicle 100. User interface 116 may control or enable control of content and/or the layout of interactive images that could be displayed on touchscreen 148. Further, user interface 116 could include one or more input/output devices within the set of peripherals 108, such as wireless communication system 146, touchscreen 148, microphone 150, and speaker 152.

Computer system 112 may control the function of vehicle 100 based on inputs received from various subsystems (e.g., propulsion system 102, sensor system 104, or control system 106), as well as from user interface 116. For example, computer system 112 may utilize input from sensor system 104 in order to estimate the output produced by propulsion system 102 and control system 106. Depending upon the embodiment, computer system 112 could be operable to monitor many aspects of vehicle 100 and its subsystems. In some embodiments, computer system 112 may disable some or all functions of the vehicle 100 based on signals received from sensor system 104.

The components of vehicle 100 could be configured to work in an interconnected fashion with other components within or outside their respective systems. For instance, in an example embodiment, camera 130 could capture a plurality of images that could represent information about a state of a surrounding environment of vehicle 100 operating in an autonomous or semi-autonomous mode. The state of the surrounding environment could include parameters of the road on which the vehicle is operating. For example, computer vision system 140 may be able to recognize the slope (grade) or other features based on the plurality of images of a roadway. Additionally, the combination of GPS 122 and the features recognized by computer vision system 140 may be used with map data stored in data storage 114 to determine specific road parameters. Further, radar 126 and/or lidar 128, and/or some other environmental mapping, ranging, and/or positioning sensor system may also provide information about the surroundings of the vehicle.

In other words, a combination of various sensors (which could be termed input-indication and output-indication sensors) and computer system 112 could interact to provide an indication of an input provided to control a vehicle or an indication of the surroundings of a vehicle.

In some embodiments, computer system 112 may make a determination about various objects based on data that is provided by systems other than the radio system. For example, vehicle 100 may have lasers or other optical sensors configured to sense objects in a field of view of the vehicle. Computer system 112 may use the outputs from the various sensors to determine information about objects in a field of view of the vehicle, and may determine distance and direction information to the various objects. Computer system 112 may also determine whether objects are desirable or undesirable based on the outputs from the various sensors.

Although Figure 1 shows various components of vehicle 100 (i.e., wireless communication system 146, computer system 112, data storage 114, and user interface 116) as being integrated into the vehicle 100, one or more of these components could be mounted or associated separately from vehicle 100. For example, data storage 114 could, in part or in full, exist separate from vehicle 100. Thus, vehicle 100 could be provided in the form of device elements that may be located separately or together. The device elements that make up vehicle 100 could be communicatively coupled together in a wired and/or wireless fashion.

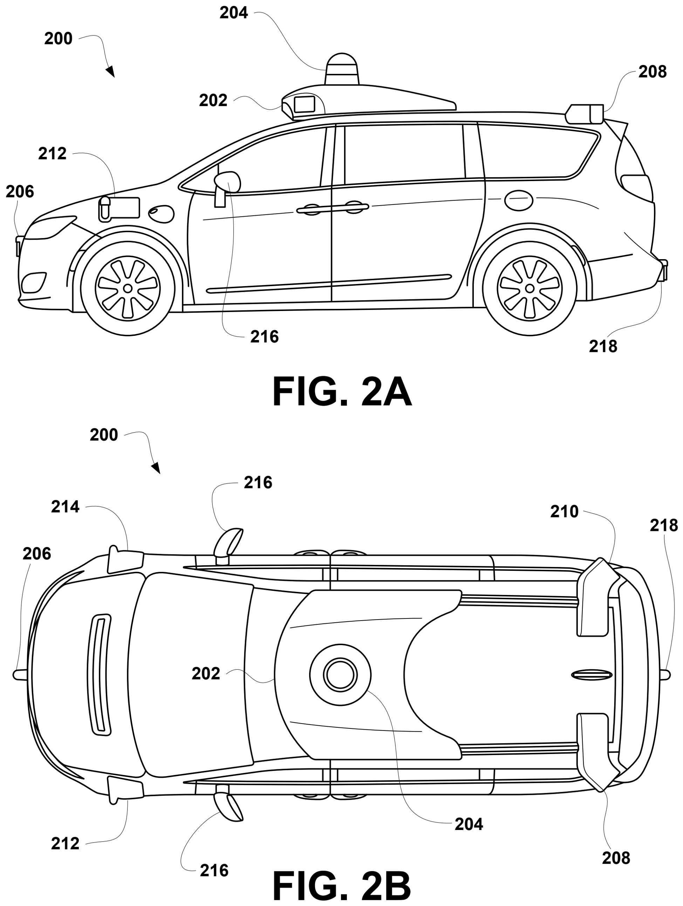

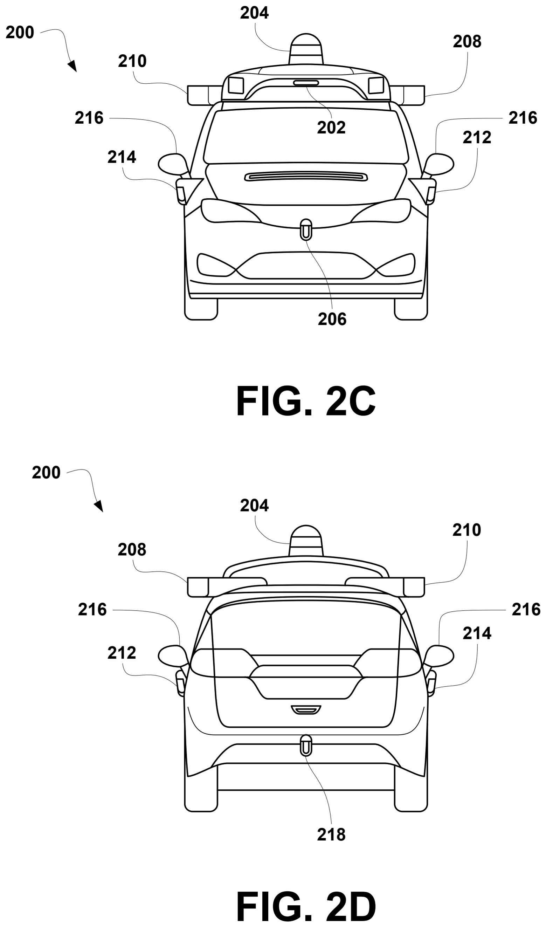

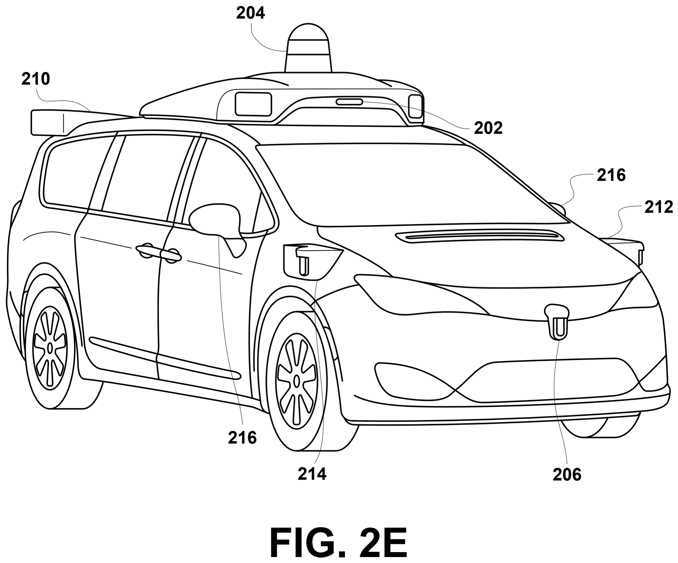

Figures 2A-2E show an example vehicle 200 (e.g., a fully autonomous vehicle or semi-autonomous vehicle) that can include some or all of the functions described in connection with vehicle 100 in reference to Figure 1. Although vehicle 200 is illustrated in Figures 2A-2E as a van with side view mirrors for illustrative purposes, the present disclosure is not so limited. For instance, the vehicle 200 can represent a truck, a car, a semi-trailer truck, a motorcycle, a golf cart, an off-road vehicle, a farm vehicle, or any other vehicle that is described elsewhere herein (e.g., buses, boats, airplanes, helicopters, drones, lawn mowers, earth movers, submarines, all-terrain vehicles, snowmobiles, aircraft, recreational vehicles, amusement park vehicles, farm equipment, construction equipment or vehicles, warehouse equipment or vehicles, factory equipment or vehicles, trams, trains, trolleys, sidewalk delivery vehicles, and robot devices).

The example vehicle 200 may include one or more sensor systems 202, 204, 206, 208, 210, 212, 214, and 218. In some embodiments, sensor systems 202, 204, 206, 208, 210, 212, 214, and/or 218 could represent one or more optical systems (e.g. cameras), one or more lidars, one or more radars, one or more inertial sensors, one or more humidity sensors, one or more acoustic sensors (e.g., microphones and sonar devices), or one or more other sensors configured to sense information about an environment surrounding the vehicle 200. In other words, any sensor system now known or later created could be coupled to the vehicle 200 and/or could be utilized in conjunction with various operations of the vehicle 200. As an example, a lidar could be utilized in self-driving or other types of navigation, planning, perception, and/or mapping operations of the vehicle 200. In addition, sensor systems 202, 204, 206, 208, 210, 212, 214, and/or 218 could represent a combination of sensors described herein (e.g., one or more lidars and radars; one or more lidars and cameras; one or more cameras and radars; or one or more lidars, cameras, and radars).

Note that the number, location, and type of sensor systems (e.g., 202 and 204) depicted in Figures 2A-E are intended as a non-limiting example of the location, number, and type of such sensor systems of an autonomous or semi-autonomous vehicle. Alternative numbers, locations, types, and configurations of such sensors are possible (e.g., to comport with vehicle size, shape, aerodynamics, fuel economy, aesthetics, or other conditions, to reduce cost, or to adapt to specialized environmental or application circumstances). For example, the sensor systems (e.g., 202 and 204) could be disposed in various other locations on the vehicle (e.g., at location 216) and could have fields of view that correspond to internal and/or surrounding environments of the vehicle 200.

The sensor system 202 may be mounted atop the vehicle 200 and may include one or more sensors configured to detect information about an environment surrounding the vehicle 200, and output indications of the information. For example, sensor system 202 can include any combination of cameras, radars, lidars, inertial sensors, humidity sensors, and acoustic sensors (e.g., microphones and sonar devices). The sensor system 202 can include one or more movable mounts that could be operable to adjust the orientation of one or more sensors in the sensor system 202. In one embodiment, the movable mount could include a rotating platform that could scan sensors so as to obtain information from each direction around the vehicle 200. In another embodiment, the movable mount of the sensor system 202 could be movable in a scanning fashion within a particular range of angles and/or azimuths and/or elevations. The sensor system 202 could be mounted atop the roof of a car, although other mounting locations are possible.

Additionally, the sensors of sensor system 202 could be distributed in different locations and need not be collocated in a single location. Furthermore, each sensor of sensor system 202 can be configured to be moved or scanned independently of other sensors of sensor system 202. Additionally or alternatively, multiple sensors may be mounted at one or more of the sensor locations 202, 204, 206, 208, 210, 212, 214, and/or 218. For example, there may be two lidar devices mounted at a sensor location and/or there may be one lidar device and one radar mounted at a sensor location.

The one or more sensor systems 202, 204, 206, 208, 210, 212, 214, and/or 218 could include one or more lidar devices. For example, the lidar devices could include a plurality of light-emitter devices arranged over a range of angles with respect to a given plane (e.g., the x-y plane). For example, one or more of the sensor systems 202, 204, 206, 208, 210, 212, 214, and/or 218 may be configured to rotate or pivot about an axis (e.g., the z-axis) perpendicular to the given plane so as to illuminate an environment surrounding the vehicle 200 with light pulses. Based on detecting various aspects of reflected light pulses (e.g., the elapsed time of flight, polarization, and intensity), information about the surrounding environment may be determined.

In an example embodiment, sensor systems 202, 204, 206, 208, 210, 212, 214, and/or 218 may be configured to provide respective point cloud information that may relate to physical objects within the surrounding environment of the vehicle 200. While vehicle 200 and sensor systems 202, 204, 206, 208, 210, 212, 214, and 218 are illustrated as including certain features, it will be understood that other types of sensor systems are contemplated within the scope of the present disclosure. Further, the example vehicle 200 can include any of the components described in connection with vehicle 100 of Figure 1.

In an example configuration, one or more radars can be located on vehicle 200. Similar to radar 126 described above, the one or more radars may include antennas configured to transmit and receive radio waves (e.g., electromagnetic waves having frequencies between 30 Hz and 300 GHz). Such radio waves may be used to determine the distance to and/or velocity of one or more objects in the surrounding environment of the vehicle 200. For example, one or more sensor systems 202, 204, 206, 208, 210, 212, 214, and/or 218 could include one or more radars. In some examples, one or more radars can be located near the rear of the vehicle 200 (e.g., sensor systems 208 and 210), to actively scan the environment near the back of the vehicle 200 for the presence of radio-reflective objects. Similarly, one or more radars can be located near the front of the vehicle 200 (e.g., sensor systems 212 or 214) to actively scan the environment near the front of the vehicle 200. A radar can be situated, for example, in a location suitable to illuminate a region including a forward-moving path of the vehicle 200 without occlusion by other features of the vehicle 200. For example, a radar can be embedded in and/or mounted in or near the front bumper, front headlights, cowl, and/or hood, etc. Furthermore, one or more additional radars can be located to actively scan the side and/or rear of the vehicle 200 for the presence of radio-reflective objects, such as by including such devices in or near the rear bumper, side panels, rocker panels, and/or undercarriage, etc.

The vehicle 200 can include one or more cameras. For example, the one or more sensor systems 202, 204, 206, 208, 210, 212, 214, and/or 218 could include one or more cameras. The camera can be a photosensitive instrument, such as a still camera, a video camera, a thermal imaging camera, a stereo camera, a night vision camera, etc., that is configured to capture a plurality of images of the surrounding environment of the vehicle 200. To this end, the camera can be configured to detect visible light, and can additionally or alternatively be configured to detect light from other portions of the spectrum, such as infrared or ultraviolet light. The camera can be a two-dimensional detector, and can optionally have a three-dimensional spatial range of sensitivity. In some embodiments, the camera can include, for example, a range detector configured to generate a two-dimensional image indicating distance from the camera to a number of points in the surrounding environment. To this end, the camera may use one or more range detecting techniques. For example, the camera can provide range information by using a structured light technique in which the vehicle 200 illuminates an object in the surrounding environment with a predetermined light pattern, such as a grid or checkerboard pattern and uses the camera to detect a reflection of the predetermined light pattern from environmental surroundings. Based on distortions in the reflected light pattern, the vehicle 200 can determine the distance to the points on the object. The predetermined light pattern may comprise infrared light, or radiation at other suitable wavelengths for such measurements. In some examples, the camera can be mounted inside a front windshield of the vehicle 200. Specifically, the camera can be situated to capture images from a forward-looking view with respect to the orientation of the vehicle 200. Other mounting locations and viewing angles of the camera can also be used, either inside or outside the vehicle 200. Further, the camera can have associated optics operable to provide an adjustable field of view. Still further, the camera can be mounted to vehicle 200 with a movable mount to vary a pointing angle of the camera, such as via a pan/tilt mechanism.

The vehicle 200 may also include one or more acoustic sensors (e.g., one or more of the sensor systems 202, 204, 206, 208, 210, 212, 214, 216, 218 may include one or more acoustic sensors) used to sense a surrounding environment of vehicle 200. Acoustic sensors may include microphones (e.g., piezoelectric microphones, condenser microphones, ribbon microphones, or microelectromechanical systems (MEMS) microphones) used to sense acoustic waves (i.e., pressure differentials) in a fluid (e.g., air) of the environment surrounding the vehicle 200. Such acoustic sensors may be used to identify sounds in the surrounding environment (e.g., sirens, human speech, animal sounds, or alarms) upon which control strategy for vehicle 200 may be based. For example, if the acoustic sensor detects a siren (e.g., an ambulatory siren or a fire engine siren), vehicle 200 may slow down and/or navigate to the edge of a roadway.

Although not shown in Figures 2A-2E, the vehicle 200 can include a wireless communication system (e.g., similar to the wireless communication system 146 of Figure 1 and/or in addition to the wireless communication system 146 of Figure 1). The wireless communication system may include wireless transmitters and receivers that could be configured to communicate with devices external or internal to the vehicle 200. Specifically, the wireless communication system could include transceivers configured to communicate with other vehicles and/or computing devices, for instance, in a vehicular communication system or a roadway station. Examples of such vehicular communication systems include DSRC, radio frequency identification (RFID), and other proposed communication standards directed towards intelligent transport systems.

The vehicle 200 may include one or more other components in addition to or instead of those shown. The additional components may include electrical or mechanical functionality.

A control system of the vehicle 200 may be configured to control the vehicle 200 in accordance with a control strategy from among multiple possible control strategies. The control system may be configured to receive information from sensors coupled to the vehicle 200 (on or off the vehicle 200), modify the control strategy (and an associated driving behavior) based on the information, and control the vehicle 200 in accordance with the modified control strategy. The control system further may be configured to monitor the information received from the sensors, and continuously evaluate driving conditions; and also may be configured to modify the control strategy and driving behavior based on changes in the driving conditions. For example, a route taken by a vehicle from one destination to another may be modified based on driving conditions. Additionally or alternatively, the velocity, acceleration, turn angle, follow distance (i.e., distance to a vehicle ahead of the present vehicle), lane selection, etc. could all be modified in response to changes in the driving conditions.

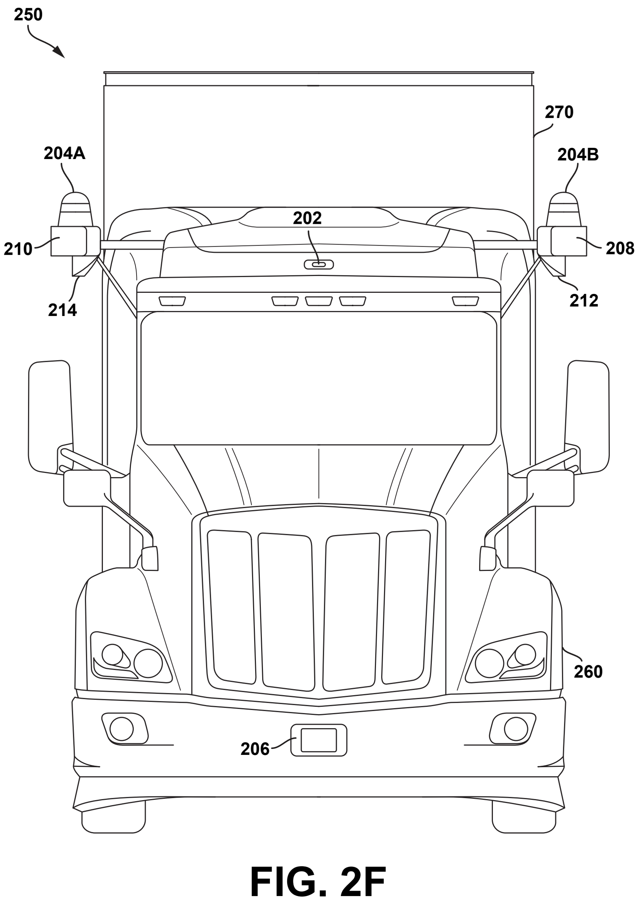

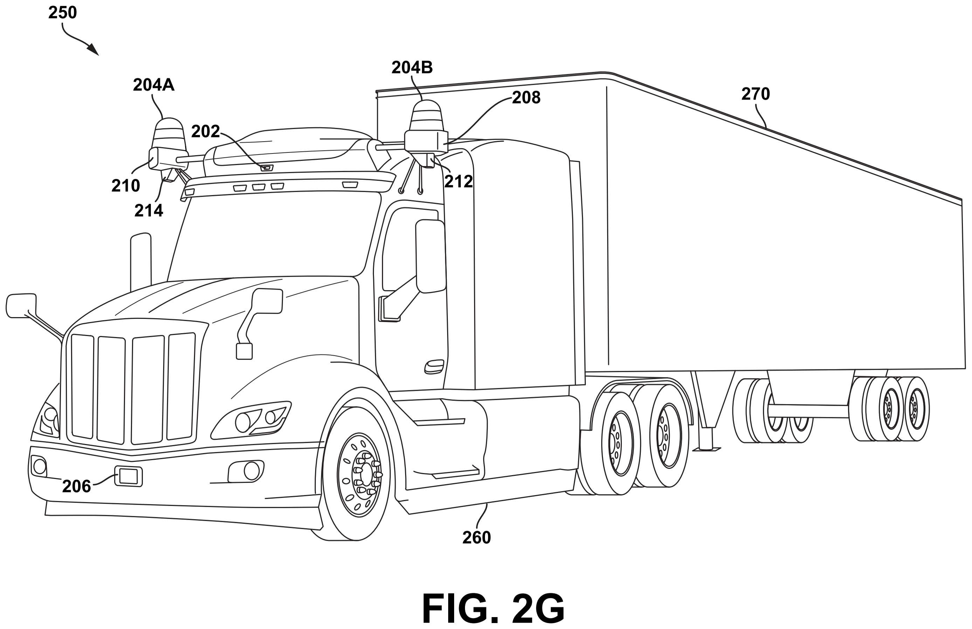

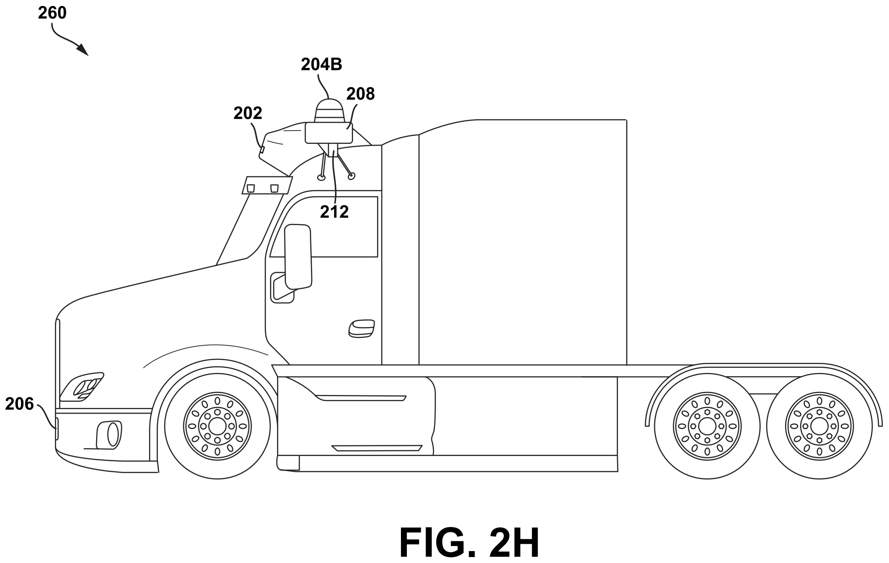

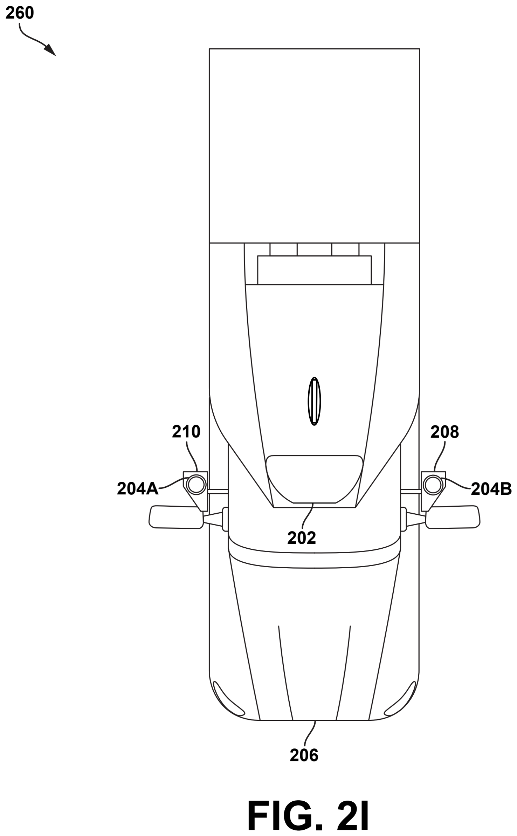

As described above, in some embodiments, the vehicle 200 may take the form of a van, but alternate forms are also possible and are contemplated herein. As such, Figures 2F-2I illustrate embodiments where a vehicle 250 takes the form of a semi-truck. For example, Figure 2F illustrates a front-view of the vehicle 250 and Figure 2G illustrates an isometric view of the vehicle 250. In embodiments where the vehicle 250 is a semi-truck, the vehicle 250 may include a tractor portion 260 and a trailer portion 270 (illustrated in Figure 2G). Figures 2H and 2I provide a side view and a top view, respectively, of the tractor portion 260. Similar to the vehicle 200 illustrated above, the vehicle 250 illustrated in Figures 2F-2I may also include a variety of sensor systems (e.g., similar to the sensor systems 202, 206, 208, 210, 212, 214 shown and described with reference to Figures 2A-2E). In some embodiments, whereas the vehicle 200 of Figures 2A-2E may only include a single copy of some sensor systems (e.g., the sensor system 204), the vehicle 250 illustrated in Figures 2F-2I may include multiple copies of that sensor system (e.g., the sensor systems 204A and 204B, as illustrated).

While drawings and description throughout may reference a given form of vehicle (e.g., the semi-truck vehicle 250 or the van vehicle 200), it is understood that embodiments described herein can be equally applied in a variety of vehicle contexts (e.g., with modifications employed to account for a form factor of vehicle). For example, sensors and/or other components described or illustrated as being part of the van vehicle 200 could also be used (e.g., for navigation and/or obstacle detection and avoidance) in the semi-truck vehicle 250

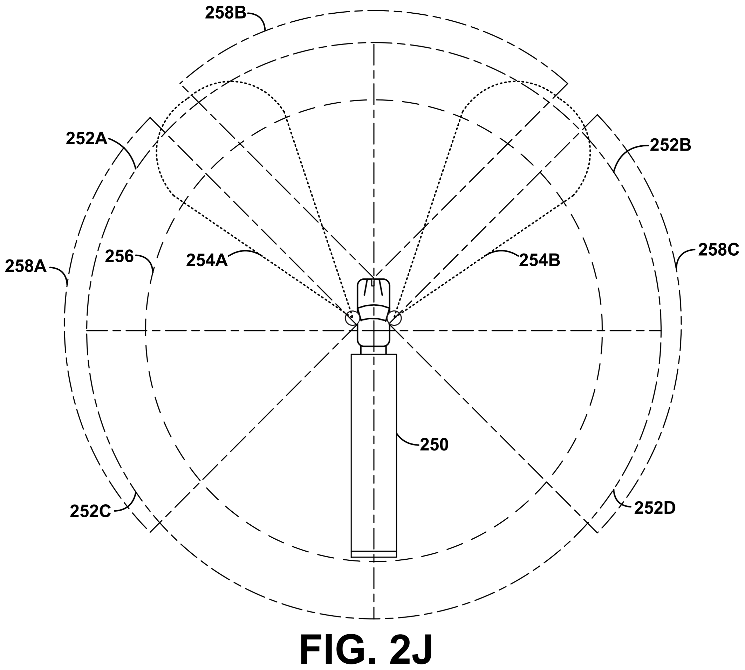

Figure 2J illustrates various sensor fields of view (e.g., associated with the vehicle 250 described above). As described above, vehicle 250 may contain a plurality of sensors / sensor units. The locations of the various sensors may correspond to the locations of the sensors disclosed in Figures 2F-2I, for example. However, in some instances, the sensors may have other locations. Sensors location reference numbers are omitted from Figure 2J for simplicity of the drawing. For each sensor unit of vehicle 250, Figure 2J illustrates a representative field of view (e.g., fields of view labeled as 252A, 252B, 252C, 252D, 254A, 254B, 256, 258A, 258B, and 258C). The field of view of a sensor may include an angular region (e.g., an azimuthal angular region and/or an elevational angular region) over which the sensor may detect objects.

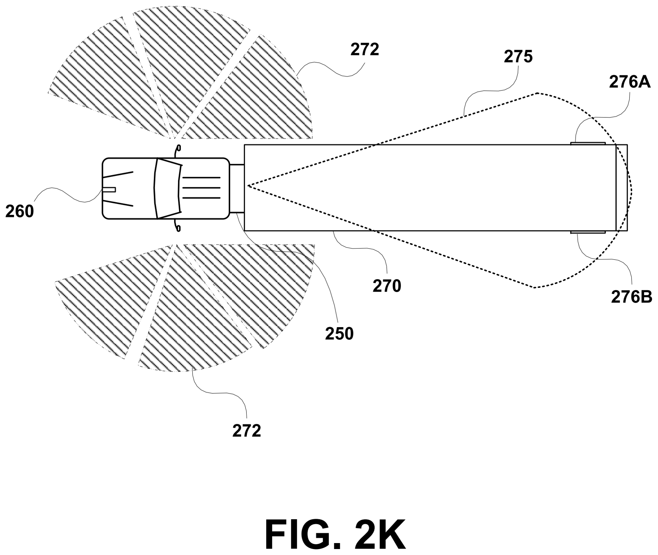

Figure 2K illustrates beam steering for a sensor of a vehicle (e.g., the vehicle 250 shown and described with reference to Figures 2F-2J), according to example embodiments. In various embodiments, a sensor unit of vehicle 250 may be a radar, a lidar, a sonar, etc. Further, in some embodiments, during the operation of the sensor, the sensor may be scanned within the field of view of the sensor. Various different scanning angles for an example sensor are shown as regions 272, which each indicate the angular region over which the sensor is operating. The sensor may periodically or iteratively change the region over which it is operating. In some embodiments, multiple sensors may be used by vehicle 250 to measure regions 272. In addition, other regions may be included in other examples. For instance, one or more sensors may measure aspects of the trailer 270 of vehicle 250 and/or a region directly in front of vehicle 250.

At some angles, region of operation 275 of the sensor may include rear wheels 276A, 276B of trailer 270. Thus, the sensor may measure rear wheel 276A and/or rear wheel 276B during operation. For example, rear wheels 276A, 276B may reflect lidar signals or radar signals transmitted by the sensor. The sensor may receive the reflected signals from rear wheels 276A, 276. Therefore, the data collected by the sensor may include data from the reflections off the wheel.

In some instances, such as when the sensor is a radar, the reflections from rear wheels 276A, 276B may appear as noise in the received radar signals. Consequently, the radar may operate with an enhanced signal to noise ratio in instances where rear wheels 276A, 276B direct radar signals away from the sensor.

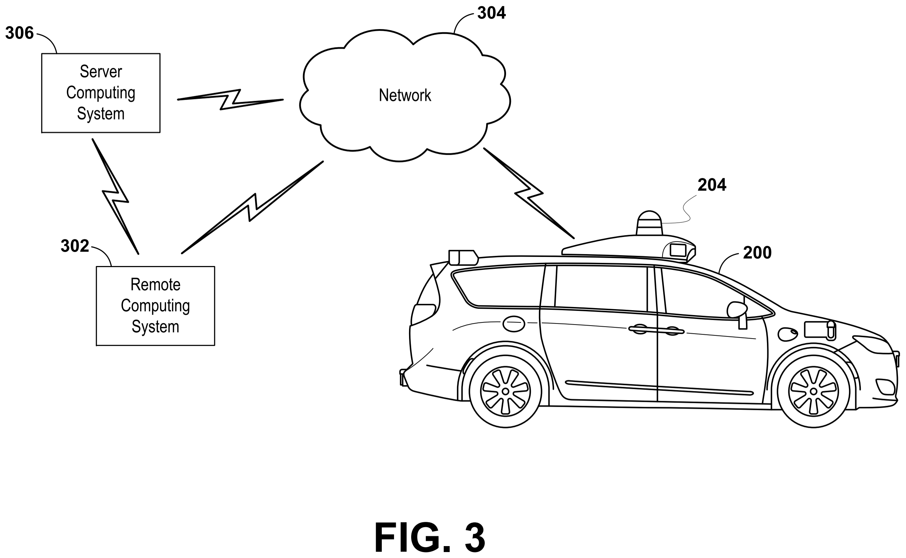

Figure 3 is a conceptual illustration of wireless communication between various computing systems related to an autonomous or semi-autonomous vehicle, according to example embodiments. In particular, wireless communication may occur between remote computing system 302 and vehicle 200 via network 304. Wireless communication may also occur between server computing system 306 and remote computing system 302, and between server computing system 306 and vehicle 200.

Vehicle 200 can correspond to various types of vehicles capable of transporting passengers or objects between locations, and may take the form of any one or more of the vehicles discussed above. In some instances, vehicle 200 may operate in an autonomous or semi-autonomous mode that enables a control system to safely navigate vehicle 200 between destinations using sensor measurements. When operating in an autonomous or semi-autonomous mode, vehicle 200 may navigate with or without passengers. As a result, vehicle 200 may pick up and drop off passengers between desired destinations.

Remote computing system 302 may represent any type of device related to remote assistance techniques, including but not limited to those described herein. Within examples, remote computing system 302 may represent any type of device configured to (i) receive information related to vehicle 200, (ii) provide an interface through which a human operator can in turn perceive the information and input a response related to the information, and (iii) transmit the response to vehicle 200 or to other devices. Remote computing system 302 may take various forms, such as a workstation, a desktop computer, a laptop, a tablet, a mobile phone (e.g., a smart phone), and/or a server. In some examples, remote computing system 302 may include multiple computing devices operating together in a network configuration.

Remote computing system 302 may include one or more subsystems and components similar or identical to the subsystems and components of vehicle 200. At a minimum, remote computing system 302 may include a processor configured for performing various operations described herein. In some embodiments, remote computing system 302 may also include a user interface that includes input/output devices, such as a touchscreen and a speaker. Other examples are possible as well.

Network 304 represents infrastructure that enables wireless communication between remote computing system 302 and vehicle 200. Network 304 also enables wireless communication between server computing system 306 and remote computing system 302, and between server computing system 306 and vehicle 200.

The position of remote computing system 302 can vary within examples. For instance, remote computing system 302 may have a remote position from vehicle 200 that has a wireless communication via network 304. In another example, remote computing system 302 may correspond to a computing device within vehicle 200 that is separate from vehicle 200, but with which a human operator can interact while a passenger or driver of vehicle 200. In some examples, remote computing system 302 may be a computing device with a touchscreen operable by the passenger of vehicle 200.

In some embodiments, operations described herein that are performed by remote computing system 302 may be additionally or alternatively performed by vehicle 200 (i.e., by any system(s) or subsystem(s) of vehicle 200). In other words, vehicle 200 may be configured to provide a remote assistance mechanism with which a driver or passenger of the vehicle can interact.

Server computing system 306 may be configured to wirelessly communicate with remote computing system 302 and vehicle 200 via network 304 (or perhaps directly with remote computing system 302 and/or vehicle 200). Server computing system 306 may represent any computing device configured to receive, store, determine, and/or send information relating to vehicle 200 and the remote assistance thereof. As such, server computing system 306 may be configured to perform any operation(s), or portions of such operation(s), that is/are described herein as performed by remote computing system 302 and/or vehicle 200. Some embodiments of wireless communication related to remote assistance may utilize server computing system 306, while others may not.

Server computing system 306 may include one or more subsystems and components similar or identical to the subsystems and components of remote computing system 302 and/or vehicle 200, such as a processor configured for performing various operations described herein, and a wireless communication interface for receiving information from, and providing information to, remote computing system 302 and vehicle 200.

The various systems described above may perform various operations. These operations and related features will now be described.

In line with the discussion above, a computing system (e.g., remote computing system 302, server computing system 306, or a computing system local to vehicle 200) may operate to use a camera to capture images of the surrounding environment of an autonomous or semi-autonomous vehicle. In general, at least one computing system will be able to analyze the images and possibly control the autonomous or semi-autonomous vehicle.

In some embodiments, to facilitate autonomous or semi-autonomous operation, a vehicle (e.g., vehicle 200) may receive data representing objects in an environment surrounding the vehicle (also referred to herein as "environment data") in a variety of ways. A sensor system on the vehicle may provide the environment data representing objects of the surrounding environment. For example, the vehicle may have various sensors, including a camera, a radar, a lidar, a microphone, a radio unit, and other sensors. Each of these sensors may communicate environment data to a processor in the vehicle about information each respective sensor receives.

In one example, a camera may be configured to capture still images and/or video. In some embodiments, the vehicle may have more than one camera positioned in different orientations. Also, in some embodiments, the camera may be able to move to capture images and/or video in different directions. The camera may be configured to store captured images and video to a memory for later processing by a processing system of the vehicle. The captured images and/or video may be the environment data. Further, the camera may include an image sensor as described herein.

In another example, a radar may be configured to transmit an electromagnetic signal that will be reflected by various objects near the vehicle, and then capture electromagnetic signals that reflect off the objects. The captured reflected electromagnetic signals may enable the radar (or processing system) to make various determinations about objects that reflected the electromagnetic signal. For example, the distances to and positions of various reflecting objects may be determined. In some embodiments, the vehicle may have more than one radar in different orientations. The radar may be configured to store captured information to a memory for later processing by a processing system of the vehicle. The information captured by the radar may be environment data.

In another example, a lidar may be configured to transmit an electromagnetic signal (e.g., infrared light, such as that from a gas or diode laser, or other possible light source) that will be reflected by target objects near the vehicle. The lidar may be able to capture the reflected electromagnetic (e.g., infrared light) signals. The captured reflected electromagnetic signals may enable the range-finding system (or processing system) to determine a range to various objects. The lidar may also be able to determine a velocity or speed of target objects and store it as environment data.

Additionally, in an example, a microphone may be configured to capture audio of the environment surrounding the vehicle. Sounds captured by the microphone may include emergency vehicle sirens and the sounds of other vehicles. For example, the microphone may capture the sound of the siren of an ambulance, fire engine, or police vehicle. A processing system may be able to identify that the captured audio signal is indicative of an emergency vehicle. In another example, the microphone may capture the sound of an exhaust of another vehicle, such as that from a motorcycle. A processing system may be able to identify that the captured audio signal is indicative of a motorcycle. The data captured by the microphone may form a portion of the environment data.

In yet another example, the radio unit may be configured to transmit an electromagnetic signal that may take the form of a Bluetooth signal, 802.11 signal, and/or other radio technology signal. The first electromagnetic radiation signal may be transmitted via one or more antennas located in a radio unit. Further, the first electromagnetic radiation signal may be transmitted with one of many different radio-signaling modes. However, in some embodiments it is desirable to transmit the first electromagnetic radiation signal with a signaling mode that requests a response from devices located near the autonomous or semi-autonomous vehicle. The processing system may be able to detect nearby devices based on the responses communicated back to the radio unit and use this communicated information as a portion of the environment data.

In some embodiments, the processing system may be able to combine information from the various sensors in order to make further determinations of the surrounding environment of the vehicle. For example, the processing system may combine data from both radar information and a captured image to determine if another vehicle or pedestrian is in front of the autonomous or semi-autonomous vehicle. In other embodiments, other combinations of sensor data may be used by the processing system to make determinations about the surrounding environment.

While operating in an autonomous mode (or semi-autonomous mode), the vehicle may control its operation with little-to-no human input. For example, a human-operator may enter an address into the vehicle and the vehicle may then be able to drive, without further input from the human (e.g., the human does not have to steer or touch the brake/gas pedals), to the specified destination. Further, while the vehicle is operating autonomously or semi-autonomously, the sensor system may be receiving environment data. The processing system of the vehicle may alter the control of the vehicle based on environment data received from the various sensors. In some examples, the vehicle may alter a velocity of the vehicle in response to environment data from the various sensors. The vehicle may change velocity in order to avoid obstacles, obey traffic laws, etc. When a processing system in the vehicle identifies objects near the vehicle, the vehicle may be able to change velocity, or alter the movement in another way.

When the vehicle detects an object but is not highly confident in the detection of the object, the vehicle can request a human operator (or a more powerful computer) to perform one or more remote assistance tasks, such as (i) confirm whether the object is in fact present in the surrounding environment (e.g., if there is actually a stop sign or if there is actually no stop sign present), (ii) confirm whether the vehicle's identification of the object is correct, (iii) correct the identification if the identification was incorrect, and/or (iv) provide a supplemental instruction (or modify a present instruction) for the autonomous or semi-autonomous vehicle. Remote assistance tasks may also include the human operator providing an instruction to control operation of the vehicle (e.g., instruct the vehicle to stop at a stop sign if the human operator determines that the object is a stop sign), although in some scenarios, the vehicle itself may control its own operation based on the human operator's feedback related to the identification of the object.

To facilitate this, the vehicle may analyze the environment data representing objects of the surrounding environment to determine at least one object having a detection confidence below a threshold. A processor in the vehicle may be configured to detect various objects of the surrounding environment based on environment data from various sensors. For example, in one embodiment, the processor may be configured to detect objects that may be important for the vehicle to recognize. Such objects may include pedestrians, bicyclists, street signs, other vehicles, indicator signals on other vehicles, and other various objects detected in the captured environment data.

The detection confidence may be indicative of a likelihood that the determined object is correctly identified in the surrounding environment, or is present in the surrounding environment. For example, the processor may perform object detection of objects within image data in the received environment data, and determine that at least one object has the detection confidence below the threshold based on being unable to identify the object with a detection confidence above the threshold. If a result of an object detection or object recognition of the object is inconclusive, then the detection confidence may be low or below the set threshold.

The vehicle may detect objects of the surrounding environment in various ways depending on the source of the environment data. In some embodiments, the environment data may come from a camera and be image or video data. In other embodiments, the environment data may come from a lidar. The vehicle may analyze the captured image or video data to identify objects in the image or video data. The methods and apparatuses may be configured to monitor image and/or video data for the presence of objects of the surrounding environment. In other embodiments, the environment data may be radar, audio, or other data. The vehicle may be configured to identify objects of the surrounding environment based on the radar, audio, or other data.

In some embodiments, the techniques the vehicle uses to detect objects may be based on a set of known data. For example, data related to environmental objects may be stored to a memory located in the vehicle. The vehicle may compare received data to the stored data to determine objects. In other embodiments, the vehicle may be configured to determine objects based on the context of the data. For example, street signs related to construction may generally have an orange color. Accordingly, the vehicle may be configured to detect objects that are orange, and located near the side of roadways as construction-related street signs. Additionally, when the processing system of the vehicle detects objects in the captured data, it also may calculate a confidence for each object.

Further, the vehicle may also have a confidence threshold. The confidence threshold may vary depending on the type of object being detected. For example, the confidence threshold may be lower for an object that may require a quick responsive action from the vehicle, such as brake lights on another vehicle. However, in other embodiments, the confidence threshold may be the same for all detected objects. When the confidence associated with a detected object is greater than the confidence threshold, the vehicle may assume the object was correctly recognized and responsively adjust the control of the vehicle based on that assumption.

When the confidence associated with a detected object is less than the confidence threshold, the actions that the vehicle takes may vary. In some embodiments, the vehicle may react as if the detected object is present despite the low confidence level. In other embodiments, the vehicle may react as if the detected object is not present.

When the vehicle detects an object of the surrounding environment, it may also calculate a confidence associated with the specific detected object. The confidence may be calculated in various ways depending on the embodiment. In one example, when detecting objects of the surrounding environment, the vehicle may compare environment data to predetermined data relating to known objects. The closer the match between the environment data and the predetermined data, the higher the confidence. In other embodiments, the vehicle may use mathematical analysis of the environment data to determine the confidence associated with the objects.

In response to determining that an object has a detection confidence that is below the threshold, the vehicle may transmit, to the remote computing system, a request for remote assistance with the identification of the object. As discussed above, the remote computing system may take various forms. For example, the remote computing system may be a computing device within the vehicle that is separate from the vehicle, but with which a human operator can interact while a passenger or driver of the vehicle, such as a touchscreen interface for displaying remote assistance information. Additionally or alternatively, as another example, the remote computing system may be a remote computer terminal or other device that is located at a location that is not near the vehicle.

The request for remote assistance may include the environment data that includes the object, such as image data, audio data, etc. The vehicle may transmit the environment data to the remote computing system over a network (e.g., network 304), and in some embodiments, via a server (e.g., server computing system 306). The human operator of the remote computing system may in turn use the environment data as a basis for responding to the request.

In some embodiments, when the object is detected as having a confidence below the confidence threshold, the object may be given a preliminary identification, and the vehicle may be configured to adjust the operation of the vehicle in response to the preliminary identification. Such an adjustment of operation may take the form of stopping the vehicle, switching the vehicle to a human-controlled mode, changing a velocity of the vehicle (e.g., a speed and/or direction), among other possible adjustments.

In other embodiments, even if the vehicle detects an object having a confidence that meets or exceeds the threshold, the vehicle may operate in accordance with the detected object (e.g., come to a stop if the object is identified with high confidence as a stop sign), but may be configured to request remote assistance at the same time as (or at a later time from) when the vehicle operates in accordance with the detected object.

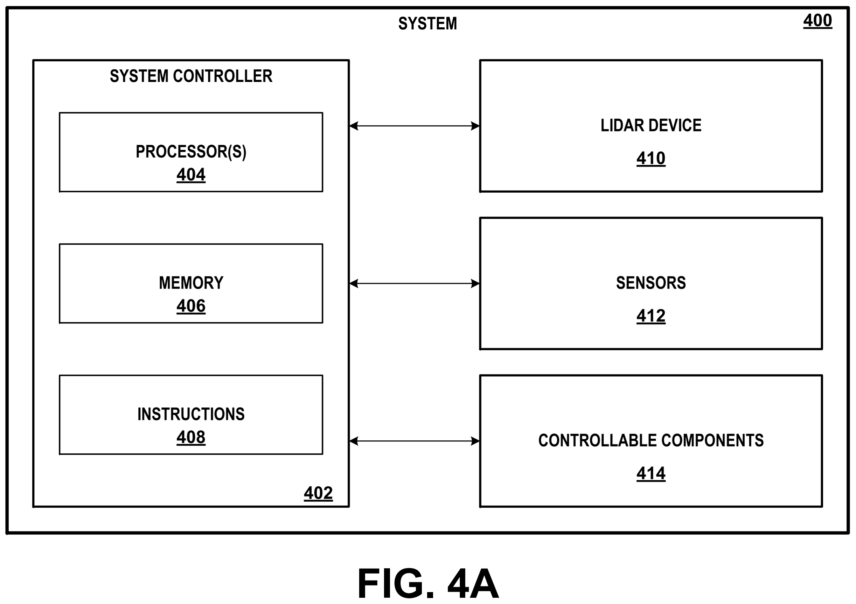

Figure 4A is a block diagram of a system, according to example embodiments. In particular, Figure 4A shows a system 400 that includes a system controller 402, a lidar device 410, a plurality of sensors 412, and a plurality of controllable components 414. System controller 402 includes processor(s) 404, a memory 406, and instructions 408 stored on the memory 406 and executable by the processor(s) 404 to perform functions.

The processor(s) 404 can include one or more processors, such as one or more general-purpose microprocessors (e.g., having a single core or multiple cores) and/or one or more special purpose microprocessors. The one or more processors may include, for instance, one or more central processing units (CPUs), one or more microcontrollers, one or more graphical processing units (GPUs), one or more tensor processing units (TPUs), one or more ASICs, and/or one or more field-programmable gate arrays (FPGAs). Other types of processors, computers, or devices configured to carry out software instructions are also contemplated herein.

The memory 406 may include a computer-readable medium, such as a non-transitory, computer-readable medium, which may include without limitation, read-only memory (ROM), programmable read-only memory (PROM), erasable programmable read-only memory (EPROM), electrically erasable programmable read-only memory (EEPROM), non-volatile random-access memory (e.g., flash memory), a solid state drive (SSD), a hard disk drive (HDD), a Compact Disc (CD), a Digital Video Disk (DVD), a digital tape, read/write (R/W) CDs, R/W DVDs, etc.

The lidar device 410, described further below, includes a plurality of light emitters configured to emit light (e.g., in light pulses) and one or more light detectors configured to detect light (e.g., reflected portions of the light pulses). The lidar device 410 may generate three-dimensional (3D) point cloud data from outputs of the light detector(s), and provide the 3D point cloud data to the system controller 402. The system controller 402, in turn, may perform operations on the 3D point cloud data to determine the characteristics of a surrounding environment (e.g., relative positions of objects within a surrounding environment, edge detection, object detection, and proximity sensing).

Similarly, the system controller 402 may use outputs from the plurality of sensors 412 to determine the characteristics of the system 400 and/or characteristics of the surrounding environment. For example, the sensors 412 may include one or more of a GPS, an IMU, an image capture device (e.g., a camera), a light sensor, a heat sensor, and other sensors indicative of parameters relevant to the system 400 and/or the surrounding environment. The lidar device 410 is depicted as separate from the sensors 412 for purposes of example, and may be considered as part of or as the sensors 412 in some examples.

Based on characteristics of the system 400 and/or the surrounding environment determined by the system controller 402 based on the outputs from the lidar device 410 and the sensors 412, the system controller 402 may control the controllable components 414 to perform one or more actions. For example, the system 400 may correspond to a vehicle, in which case the controllable components 414 may include a braking system, a turning system, and/or an accelerating system of the vehicle, and the system controller 402 may change aspects of these controllable components based on characteristics determined from the lidar device 410 and/or sensors 412 (e.g., when the system controller 402 controls the vehicle in an autonomous or semi-autonomous mode). Within examples, the lidar device 410 and the sensors 412 are also controllable by the system controller 402.

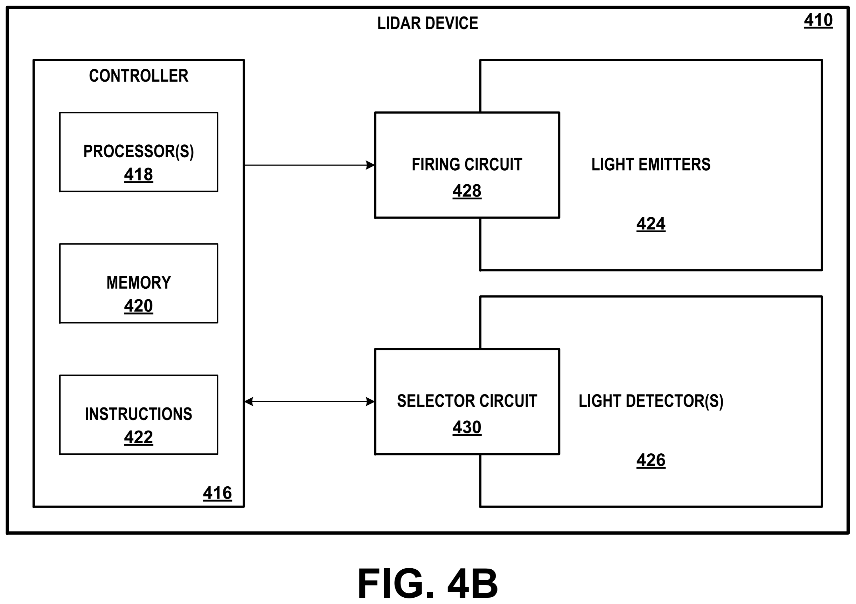

Figure 4B is a block diagram of a lidar device, according to an example embodiment. In particular, Figure 4B shows a lidar device 410, having a controller 416 configured to control a plurality of light emitters 424 and one or more light detector(s), e.g., a plurality of light detectors 426, etc. The lidar device 410 further includes a firing circuit 428 configured to select and provide power to respective light emitters of the plurality of light emitters 424 and may include a selector circuit 430 configured to select respective light detectors of the plurality of light detectors 426. The controller 416 includes processor(s) 418, a memory 420, and instructions 422 stored on the memory 420.

Similar to processor(s) 404, the processor(s) 418 can include one or more processors, such as one or more general-purpose microprocessors and/or one or more special purpose microprocessors. The one or more processors may include, for instance, one or more CPUs, one or more microcontrollers, one or more GPUs, one or more TPUs, one or more ASICs, and/or one or more FPGAs. Other types of processors, computers, or devices configured to carry out software instructions are also contemplated herein.

Similar to memory 406, the memory 420 may include a computer-readable medium, such as a non-transitory, computer-readable medium, such as, but not limited to, ROM, PROM, EPROM, EEPROM, non-volatile random-access memory (e.g., flash memory), a SSD, a HDD, a CD, a DVD, a digital tape, R/W CDs, R/W DVDs, etc.

The instructions 422 are stored on memory 420 and executable by the processor(s) 418 to perform functions related to controlling the firing circuit 428 and the selector circuit 430, for generating 3D point cloud data, and for processing the 3D point cloud data (or perhaps facilitating processing the 3D point cloud data by another computing device, such as the system controller 402).

The controller 416 can determine 3D point cloud data by using the light emitters 424 to emit pulses of light. A time of emission is established for each light emitter and a relative location at the time of emission is also tracked. Aspects of a surrounding environment of the lidar device 410, such as various objects, reflect the pulses of light. For example, when the lidar device 410 is in a surrounding environment that includes a road, such objects may include vehicles, signs, pedestrians, road surfaces, or construction cones. Some objects may be more reflective than others, such that an intensity of reflected light may indicate a type of object that reflects the light pulses. Further, surfaces of objects may be at different positions relative to the lidar device 410, and thus take more or less time to reflect portions of light pulses back to the lidar device 410. Accordingly, the controller 416 may track a detection time at which a reflected light pulse is detected by a light detector and a relative position of the light detector at the detection time. By measuring time differences between emission times and detection times, the controller 416 can determine how far the light pulses travel prior to being received, and thus a relative distance of a corresponding object. By tracking relative positions at the emission times and detection times the controller 416 can determine an orientation of the light pulse and reflected light pulse relative to the lidar device 410, and thus a relative orientation of the object. By tracking intensities of received light pulses, the controller 416 can determine how reflective the object is. The 3D point cloud data determined based on this information may thus indicate relative positions of detected reflected light pulses (e.g., within a coordinate system, such as a Cartesian coordinate system) and intensities of each reflected light pulse.

The firing circuit 428 is used for selecting light emitters for emitting light pulses. The selector circuit 430 similarly is used for sampling outputs from light detectors.

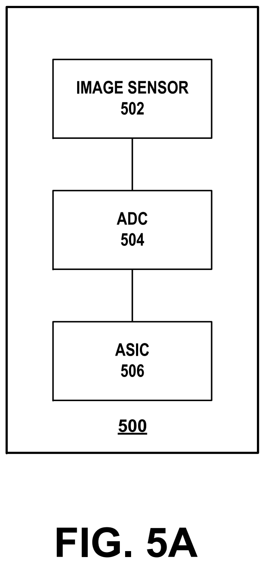

Figure 5A illustrates a device 500. The device 500 may, in some embodiments, correspond to a portion of the sensor system 102 described above in relation to Figure 1, the sensor systems 202, 204, 206, 208, 210, 212, and 214 described above in relation to Figures 2A-2E, and/or the system 400 described above in relation to Figure 4A. Such a device may also be co-located upon the vehicle 200 at the same or similar positions and/or orientations as the sensor systems 202, 204, 206, 208, 210, 212, and 214. Further, in some embodiments, multiple instances of the device 500 may be attached to the same vehicles.

In some embodiments, the device 500 may include an image sensor 502, an analog-to-digital converter (ADC) 504, and/or an application-specific integrated circuit (ASIC) 506. The image sensor 502 may be configured to capture image data about a surrounding environment of the device 500. The ADC 504 may be configured to receive captured image data from the image sensor 502 and/or provide converted image data. The ASIC 506 may be configured to receive the converted image data and/or apply a trained machine-learning model to the converted image data. The machine-learning model may be configured to identify one or more objects in the surrounding environment within the converted image data.

In some embodiments, the trained machine-learning model may be selected from a plurality of machine-learning models based on an orientation and/or position of the device 500 with regards to the vehicle 200. For example, a first trained machine-learning model may be trained to recognize vehicles, pedestrians, traffic signals, or signs, while a second trained machine-learning model is trained to recognize passing vehicles, passing cyclists, or pedestrians. Thus, the appropriate machine-learning model may be selected for the task at hand based on the orientation and/or position of the device 500 with regards to the vehicle 200.

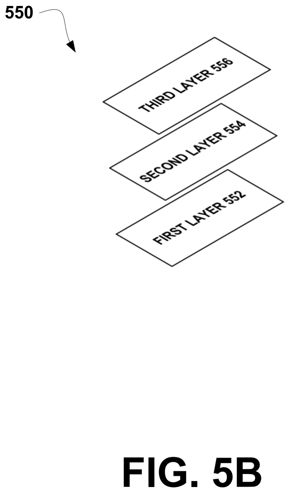

Figure 5B depicts an embodiment of the device 500 depicted in Figure 5A. As illustrated, in some embodiments, the device (depicted in Figure 5B as device 550) may include a multilayer die stack, with certain components deposited on each layer. Each layer is physically coupled to the layers immediately above and below the layer. For instance, each layer may be constructed on a substrate made of semiconducting material such as silicon. These layers may then be interconnected using wirebonding, a controlled-collapse chip connection (C4) method (also known as "flip chip") and/or through-silicon vias (TSVs). The layers may be adhered using die attach films (DAFs).

In some embodiments, the device 550 may include a multilayer die stack with at least three layers: first layer 552, second layer 554, and third layer 556. The second layer 554 may be positioned above the first layer 552, and the third layer 556 may be positioned above the second layer 554. Each layer may have disposed thereon one or more components of the sensor device 500. For instance, the application-specific integrated circuit (ASIC) 506 may be located on the first layer 552, the analog-to-digital converter (ADC) 504 may be located on the second layer 554, and the image sensor 502 may be located on the third layer 556.

As described above in relation to Figures 2A-2E, sensor systems may be located at different positions and at different orientations on the vehicle 200. This also applies to a device 500. For instance, a vehicle may have several devices 500 positioned at different locations and/or orientations about its exterior.

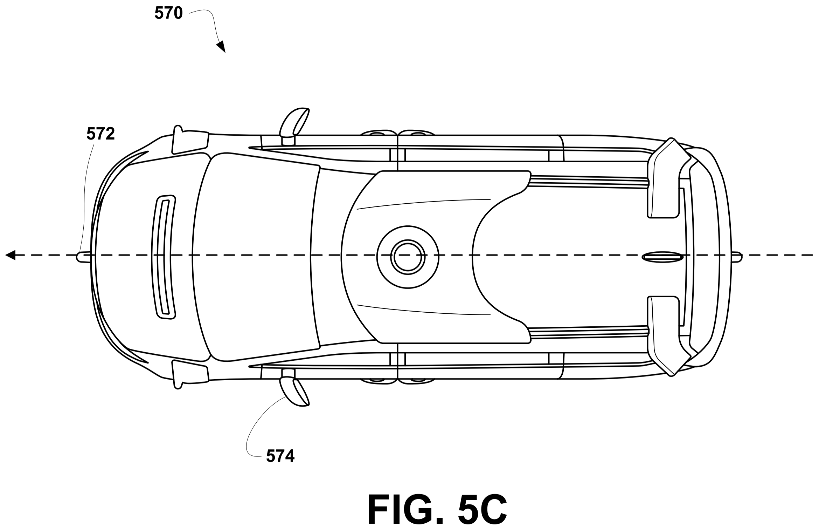

An example of this is depicted in Figure 5C, which depicts a vehicle 570 with two devices 500 positioned about its exterior: a front-facing device 572 and a side-facing device 574. The dashed line represents the direction of travel of the vehicle 570. As noted above, a vehicle may have several devices 500 positioned at different locations and/or orientations about its exterior. In some situations, the orientation of a device 500 about the vehicle 570 may be relative to a direction of travel of the vehicle 570.

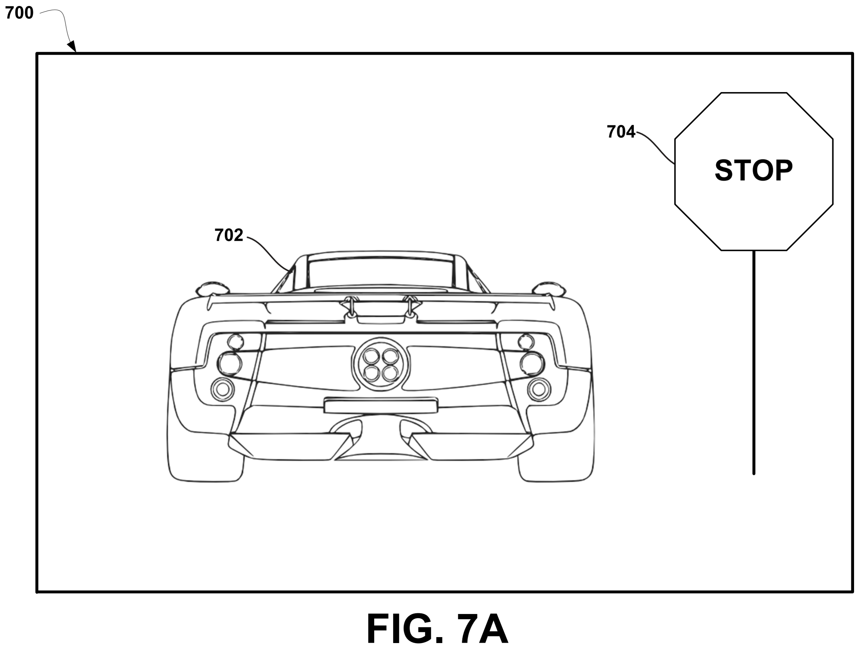

For example, a first orientation of a device may be within 15° of parallel to a direction of travel of the vehicle (e.g., the front-facing device 572), while a second orientation of another device may be within 15° of perpendicular to the direction of travel of the vehicle (e.g., the side-facing device 574. Based on this difference in location and/or orientation, different sensor devices may produce different image frames, as will be discussed later with regards to Figures 7A-7D.

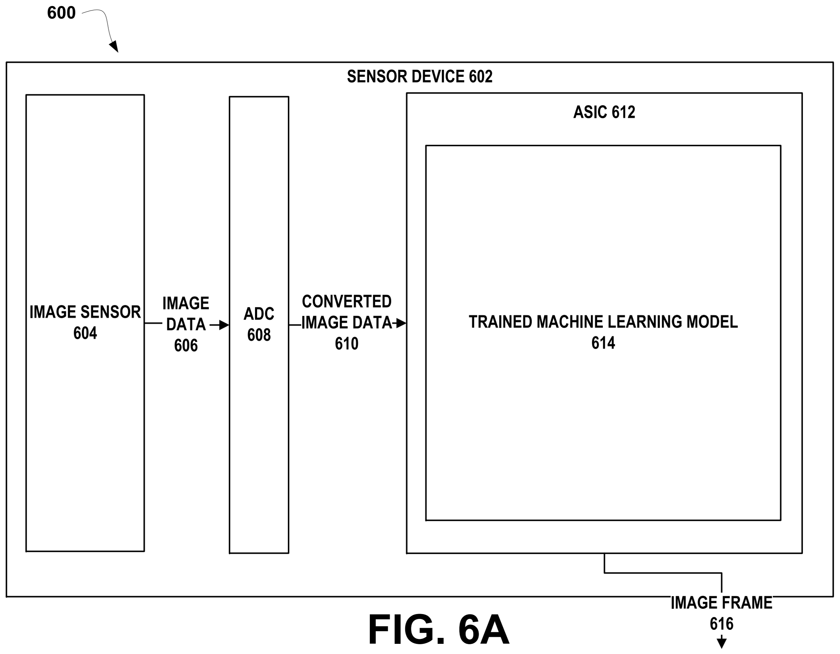

Figure 6A depicts a process 600 that may be performed by a device 602, which may correspond to device 500 or device 550 described above. Like devices 500 and 550, device 602 may include an image sensor 604, which may be configured to capture image data 606 about a surrounding environment of the device 602. This image data 606 may then be provided to an analog-to-digital converter (ADC) 608. The ADC may then convert the image data 606 from analog signals into digital information, producing converted image data 610. The converted image data 610 may then be provided to an application-specific integrated circuit (ASIC) 612. The ASIC 612 may be configured to perform processing and/or computer vision tasks on the converted image data 610. For instance, the ASIC 612 may be configured to apply a trained machine-learning model 614 to the converted image data 610 to identify one or more objects in the surrounding environment within the converted image data 610. In some embodiments, the trained machine-learning model may include a convolutional neural network (CNN).

In the context of a device 602 operating in connection with a vehicle 200, the trained machine-learning model 614 may be configured to identify objects related to navigation of the vehicle 200. In some embodiments, the ASIC 612 may receive, from a lidar device (e.g., the lidar device 410 described with regard to Figures 4A and 4B), lidar data indicative of distances between the vehicle 200 and one or more objects in the surrounding environment and/or distances to one or more objects in the surrounding environment. In some embodiments, the ASIC 612 may receive lidar data from a source other than a lidar device. For instance, the ASIC 612 may receive lidar data from a central processing unit or system, or lidar data may be stored on a memory within the device 602. In this way, lidar data collected by other lidar devices (e.g., those on other vehicles than the vehicle 200) may also be processed by the device 602. The ASIC 612 may be configured to apply the trained machine-learning model 614 to a subset of the converted image data 610 based on the lidar data. For example, the lidar data may indicate that an object is likely to be located within a certain region of the converted image data 610, and the trained machine-learning model 614 may be applied in this specific region based on such an indication.

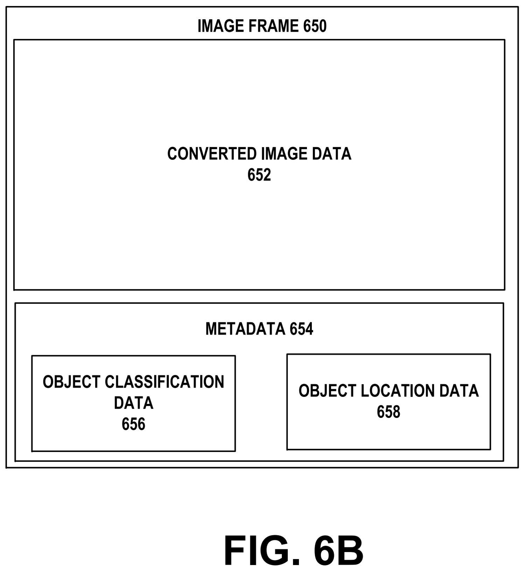

Following the processing, the ASIC 612 may output an image frame 616. The image frame 616 may include the converted image data 610 as well as additional metadata, as will be described below in relation to Figure 6B.

Figure 6B depicts a block diagram of an image frame 650, such as the image frame 616 generated by the process 600 shown in Figure 6A. The output image frame 650 may include converted image data 652, which may correspond to the converted image data 610 generated by the ADC 608. In some embodiments, the image frame 650 may be provided to a central computing device (e.g., the system controller 402 described above in relation to Figure 4A). While the image frame 650 illustrated in Figure 6B includes both converted image data 652 and metadata 654, in some embodiments, the image frame 650 may only include one or the other (e.g., only the converted image data 652).

Image frame 650 may also include metadata 654, which may include additional information regarding the image frame 650, the converted image data 652, and/or the device 602 it was produced on. For example, metadata 654 may include object classification data 656 and/or object location data 658 relating to objects identified within the converted image data 652. Such objects may have been identified and/or located through the application of the trained machine-learning model 614. For example, object classification data 656 may include a determination of whether an object present in the converted image data 652 is a vehicle, a person, a traffic signal, or a traffic sign. In some embodiments, object classification data 656 may also include information on the orientation of such objects relative to the vehicle (e.g., passing, in front of, behind, etc.).

Object location data 658 may include an indication of the location of an identified object within the converted image data 652. For example, the object location data 658 may include a region of the converted image data 652. As another example, the object location data 658 may include coordinates specifying the location of an object within the converted image data 652. In the example described above, when the trained machine-learning model 614 is applied based on lidar data, the object location data 658 may include spatial coordinates (e.g., *x, y,* and/or z coordinates) within the lidar data and/or the converted image data.

Metadata 654 may be included within the image frame 650 as one or more rows and/or columns of the image frame 650, for example as binary or text data. Examples will be provided below in relation to Figures 7A-7D.

Figure 7A depicts image data 700 captured by an image sensor of a front-mounted device (for example, located at or near the position of sensor system 206 illustrated in Figures 2A-2E and/or device 572 illustrated in Figure 5C). In the course of operations of the vehicle 200, such a front-mounted device may capture objects such as vehicles, pedestrians, traffic signals, or signs. In Figure 7A, the image data 700 captured a vehicle 702 and a stop sign 704. Such image data may then undergo processing by other components of a device as described herein, for example by an ADC and/or ASIC as in the process 600 depicted in Figure 6A.

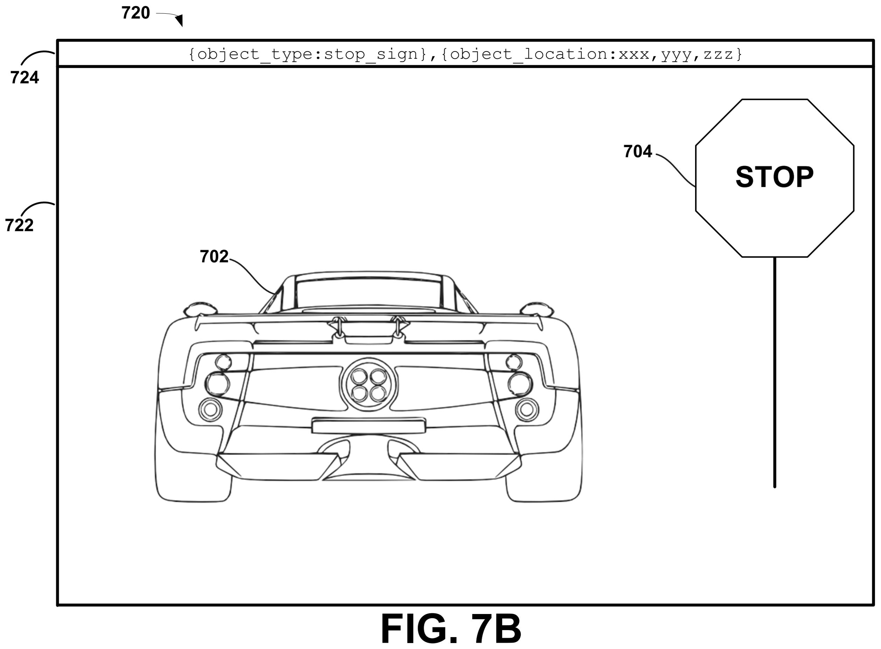

Figure 7B represents the same image data 700 after it has undergone processing by components of a device as described herein, for example through the process 600 depicted in Figure 6. In particular, Figure 7B depicts an image frame 720, containing both converted image data 722 (converted from the image data 700) and metadata 724. Such metadata 724 may be appended as an additional row (or rows) of the image frame 720. In the particular example of Figure 7B, the metadata 724 includes object classification data (object _type) and object location data (object _location), the latter in the form of three-dimensional coordinates. In some embodiments, object location data may refer to lidar data, as discussed above. While the metadata 724 is appended to the top row of the image frame 720 in Figure 7B, this is solely an example. In some embodiments, for instance the metadata 724 may be appended to bottom row(s) of the image frame 720 and/or to one or more columns of the image frame 720.

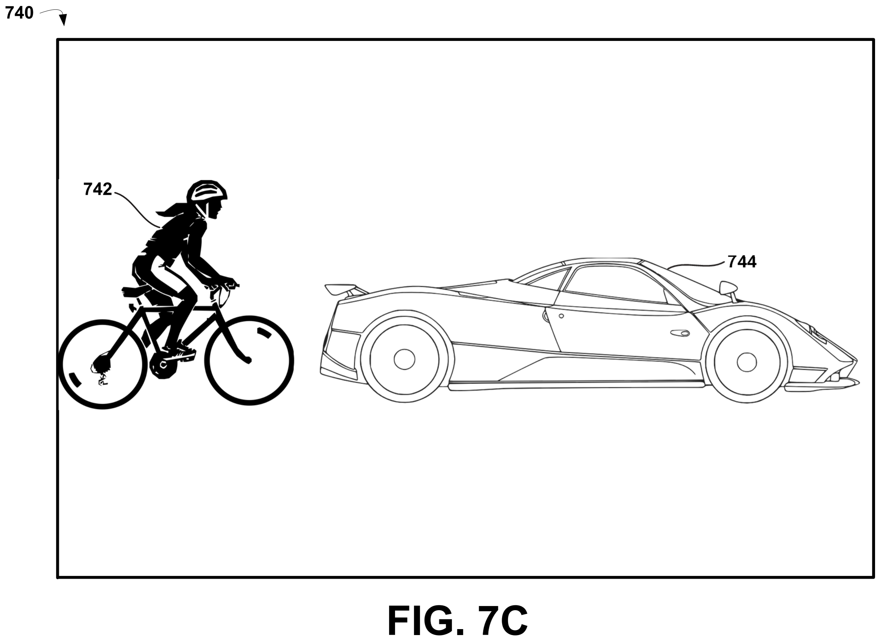

Figure 7C depicts another example of image data captured by a device located and/or oriented differently from that of Figure 7A. Specifically, it depicts image data 740 captured by an image sensor of a side-mounted device (for example, located at or near the position of sensor system 216 illustrated in Figures 2A-2E and/or device 574 illustrated in Figure 5C). In the course of operations of the vehicle 200, such a side-mounted device may capture objects such as passing vehicles, passing cyclists, or pedestrians. In Figure 7C, the image data 740 captured a passing cyclist 742 and a passing vehicle 744. Such image data may then undergo processing by other components of a device as described herein, for example by an ADC and/or ASIC as in the process 600 depicted in Figure 6A.

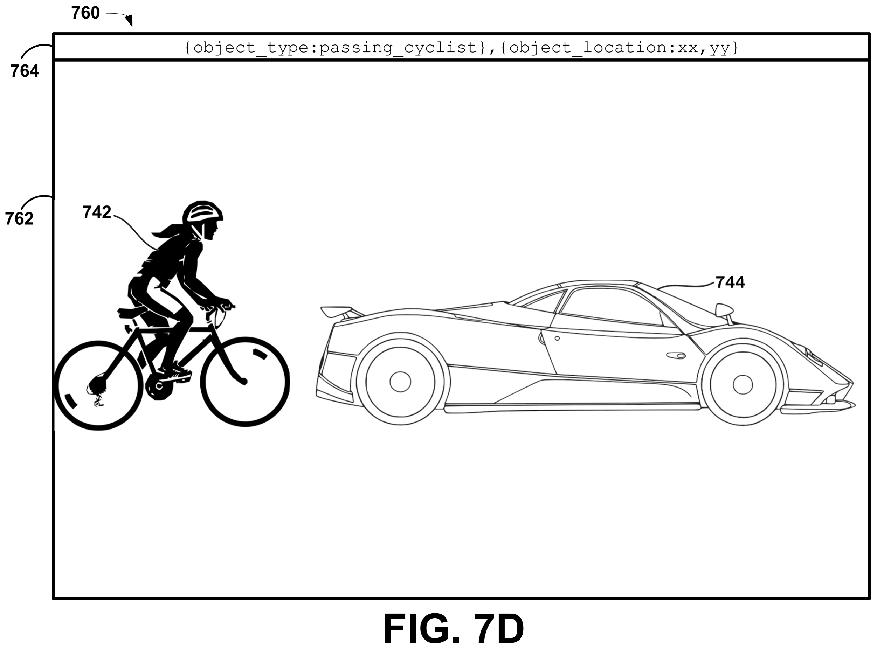

Figure 7D represents the same image data 740 after it has undergone processing by components of a device as described herein, for example through the process 600 depicted in Figure 6. In particular, Figure 7D depicts an image frame 760, containing both converted image data 762 (converted from the image data 740) and metadata 764. Such metadata 764 may be appended as an additional row (or rows) of the image frame 760. In the particular example of Figure 7D, the metadata 726 includes object classification data (object_type) and object location data (object_location) for the passing cyclist 742, the latter in the form of two-dimensional coordinates (e.g., x and y coordinates within the converted image data 762).

As described above, image frames such as image frame 720 and image frame 760 may be provided to a central computing device (e.g., the system controller 402 described above in relation to Figure 4A).

As shown in Figures 7A-7D, different devices may produce different image frames. In the interest of specialization and greater efficiency, different devices may be provided with trained machine-learning models specifically designed and/or trained for the types of image frames they are likely to work with. For example, the device that produced the image frame 720 of Figure 7B may have used a machine-learning model trained to recognize, among other things, stop signs. However, in some embodiments, the trained machine-learning models for each of the different devices may be the same model. For instance, one model may be trained to recognize multiple different types of objects (e.g., based on the collection of training data used to train the model).

As another example, trained machine-learning models may be trained according to a supervised learning process using image data collected from other vehicles using cameras or other sensors that have a same or similar orientation to the devices on which the trained machine-learning models may be deployed. For example, a front-facing device (e.g., front-facing device 572 as in Figure 5C) may be trained on image data collected from other vehicles using cameras also mounted on the front of such vehicles. In this way, the trained machine-learning models may improve the accuracy of object identification performed using the models.

In other words, the trained machine-learning model may be trained with a supervised learning process using image data collected by a camera coupled to a first auxiliary vehicle operating in an autonomous or semi-autonomous mode along an auxiliary orientation relative to a direction of travel of the auxiliary vehicle, where the orientation relative to the direction of travel of the vehicle and the auxiliary orientation relative to the direction of travel of the auxiliary vehicle are substantially the same.

As noted above, the trained machine-learning model may be selected from a plurality of machine-learning models. In some embodiments, a device (e.g., device 500) may include a memory, and the trained machine-learning model may be stored within the first memory at a time of manufacture of the vehicle. In some embodiments, the trained machine-learning model may be selected from the plurality of machine-learning models based on the location and/or orientation of the device.

In other words, a device may include a memory, and the ASIC may be configured to receive the trained machine-learning model from a remote computing device (e.g., the remote computing system 302 and/or the server computing system 306 as described with regards to Figure 3) and store the trained machine-learning model within the memory.

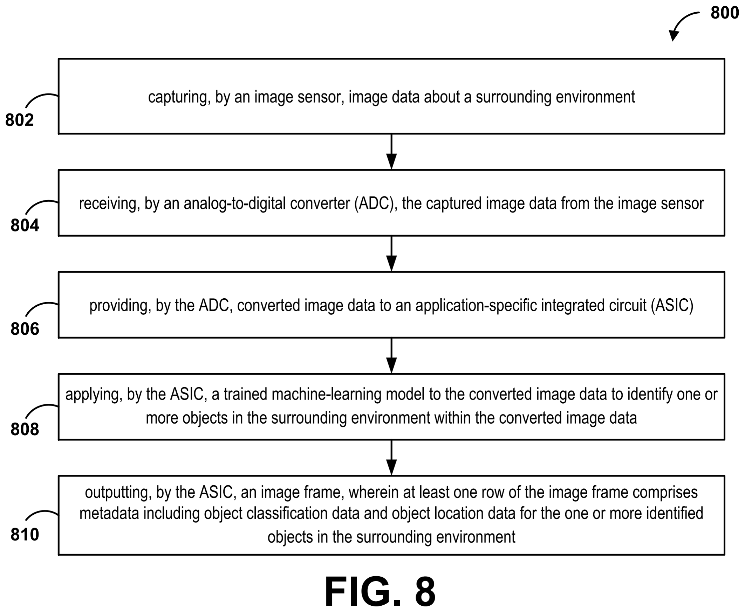

Figure 8 is a flowchart diagram of a method 800, according to example embodiments. The method 800 may be performed by a system (e.g., system 400 shown and described with reference to Figure 4A), a controller of a system (e.g., the system controller 402 shown and described with reference to Figure 4A), and/or a device (e.g., the device 500 illustrated in Figure 5A).

At block 802, the method 800 may include capturing, by an image sensor, image data about a surrounding environment.

At block 804, the method 800 may include receiving, by an analog-to-digital converter (ADC), the captured image data from the image sensor.

At block 806, the method 800 may include providing, by the ADC, converted image data to an application-specific integrated circuit (ASIC).

At block 808, the method 800 may include applying, by the ASIC, a trained machine-learning model to the converted image data to identify one or more objects in the surrounding environment within the converted image data.

At block 810, the method 800 may include outputting, by the ASIC, an image frame, wherein at least one row of the image frame includes metadata including object classification data and object location data for the one or more identified objects in the surrounding environment.

In some embodiments, the method 800 may further include receiving, by the ASIC, an updated trained machine-learning model from a remote computing device, storing, by the ASIC, the updated trained machine-learning model within a memory, capturing, by the image sensor, additional image data about the surrounding environment, receiving, by the ADC, the additional captured image data from the image sensor, providing, by the ADC, additional converted image data to the ASIC, applying, by the ASIC, the updated trained machine-learning model to the additional converted image data to identify one or more additional objects in the surrounding environment within the additional converted image data, and outputting, by the ASIC, an additional image frame, wherein at least one row of the additional image frame comprises metadata including object classification data and object location data for the one or more additional identified objects in the surrounding environment.

In some embodiments, the method 800 may further include providing, by the ASIC to a central computing device, the image frame.

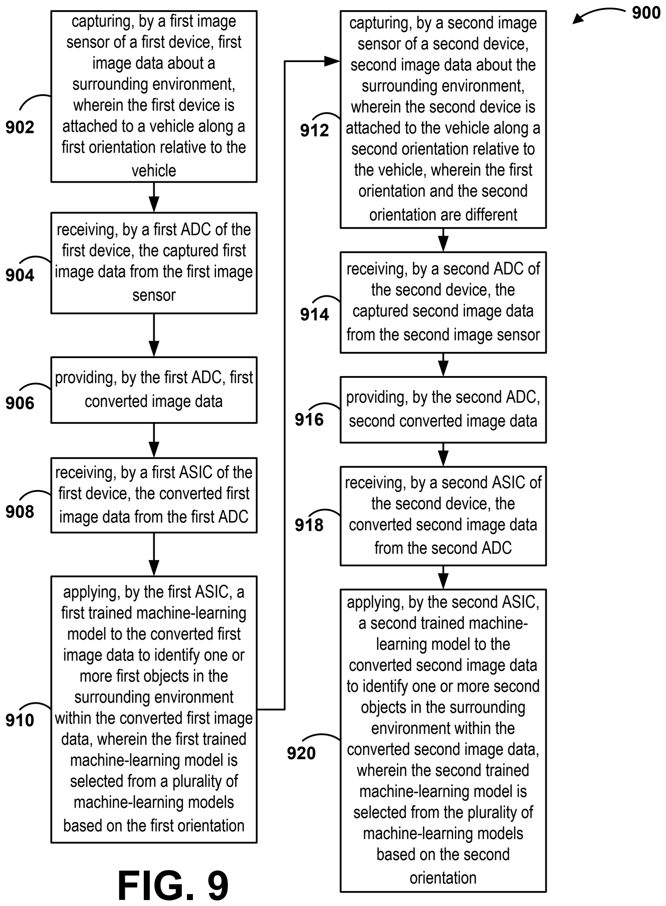

Figure 9 is a flowchart diagram of a method 900, according to example embodiments. The method 900 may be performed by a system (e.g., system 400 shown and described with reference to Figure 4A), a controller of a system (e.g., the system controller 402 shown and described with reference to Figure 4A), and/or a device (e.g., the device 500 illustrated in Figure 5A).

At block 902, the method 900 may include capturing, by a first image sensor of a first device, first image data about a surrounding environment, wherein the first device is attached to a vehicle along a first orientation relative to the vehicle;

At block 904, the method 900 may include receiving, by a first ADC of the first device, the captured first image data from the first image sensor.

At block 906, the method 900 may involve providing, by the first ADC, first converted image data.

At block 908, the method 900 may involve receiving, by a first ASIC of the first device, the converted first image data from the first ADC.

At block 910, the method 900 may involve applying, by the first ASIC, a first trained machine-learning model to the converted first image data to identify one or more first objects in the surrounding environment within the converted first image data, wherein the first trained machine-learning model is selected from a plurality of machine-learning models based on the first orientation.

At block 912, the method 900 may include capturing, by a second image sensor of a second device, second image data about the surrounding environment, wherein the second device is attached to the vehicle along a second orientation relative to the vehicle, wherein the first orientation and the second orientation are different.

At block 914, the method 900 may include receiving, by a second ADC of the second device, the captured second image data from the second image sensor.

At block 916, the method 900 may involve providing, by the second ADC, second converted image data.

At block 918, the method 900 may involve receiving, by a second ASIC of the second device, the converted second image data from the second ADC.

At block 920, the method 900 may involve applying, by the second ASIC, a second trained machine-learning model to the converted second image data to identify one or more second objects in the surrounding environment within the converted second image data, wherein the second trained machine-learning model is selected from the plurality of machine-learning models based on the second orientation.

The present disclosure is not to be limited in terms of the particular embodiments described in this application, which are intended as illustrations of various aspects. Many modifications and variations can be made without departing from its spirit and scope, as will be apparent to those skilled in the art. Functionally equivalent methods and apparatuses within the scope of the disclosure, in addition to those enumerated herein, will be apparent to those skilled in the art from the foregoing descriptions. Such modifications and variations are intended to fall within the scope of the appended claims.

The above detailed description describes various features and functions of the disclosed systems, devices, and methods with reference to the accompanying figures. In the figures, similar symbols typically identify similar components, unless context dictates otherwise. The example embodiments described herein and in the figures are not meant to be limiting. Other embodiments can be utilized, and other changes can be made, without departing from the scope of the subject matter presented herein. It will be readily understood that the aspects of the present disclosure, as generally described herein, and illustrated in the figures, can be arranged, substituted, combined, separated, and designed in a wide variety of different configurations, all of which are explicitly contemplated herein.

With respect to any or all of the message flow diagrams, scenarios, and flow charts in the figures and as discussed herein, each step, block, operation, and/or communication can represent a processing of information and/or a transmission of information in accordance with example embodiments. Alternative embodiments are included within the scope of these example embodiments. In these alternative embodiments, for example, operations described as steps, blocks, transmissions, communications, requests, responses, and/or messages can be executed out of order from that shown or discussed, including substantially concurrently or in reverse order, depending on the functionality involved. Further, more or fewer blocks and/or operations can be used with any of the message flow diagrams, scenarios, and flow charts discussed herein, and these message flow diagrams, scenarios, and flow charts can be combined with one another, in part or in whole.

A step, block, or operation that represents a processing of information can correspond to circuitry that can be configured to perform the specific logical functions of a herein-described method or technique. Alternatively or additionally, a step or block that represents a processing of information can correspond to a module, a segment, or a portion of program code (including related data). The program code can include one or more instructions executable by a processor for implementing specific logical operations or actions in the method or technique. The program code and/or related data can be stored on any type of computer-readable medium such as a storage device including RAM, a disk drive, a solid state drive, or another storage medium.

Moreover, a step, block, or operation that represents one or more information transmissions can correspond to information transmissions between software and/or hardware modules in the same physical device. However, other information transmissions can be between software modules and/or hardware modules in different physical devices.

The particular arrangements shown in the figures should not be viewed as limiting. It should be understood that other embodiments can include more or less of each element shown in a given figure. Further, some of the illustrated elements can be combined or omitted. Yet further, an example embodiment can include elements that are not illustrated in the figures.

While various aspects and embodiments have been disclosed herein, other aspects and embodiments will be apparent to those skilled in the art. The various aspects and embodiments disclosed herein are for purposes of illustration and are not intended to be limiting, with the true scope being indicated by the following claims.

The specification includes the following subject-matter expressed in the form of clauses 1-20.
1. A system comprising:
   a vehicle;
   a first device attached to the vehicle and along a first orientation relative to the vehicle, wherein the first device comprises:
      a first image sensor configured to capture first image data about a surrounding environment;
      a first analog-to-digital converter (ADC) configured to receive the captured first image data from the first image sensor and provide converted first image data; and
      a first application-specific integrated circuit (ASIC) configured to:
         receive the converted first image data from the first ADC; and
         apply a first trained machine-learning model to the converted first image data to identify one or more first objects in the surrounding environment within the converted first image data, wherein the first trained machine-learning model is selected from a plurality of machine-learning models based on the first orientation; and
   a second device attached to the vehicle and along a second orientation relative to the vehicle, wherein the first orientation and the second orientation are different, and wherein the second device comprises:
      a second image sensor configured to capture second image data about the surrounding environment;
      a second ADC configured to receive the captured second image data from the second image sensor and provide converted second image data; and
      a second ASIC configured to:
         receive the converted second image data from the second ADC; and
         apply a second trained machine-learning model to the converted second image data to identify one or more second objects in the surrounding environment within the converted second image data, wherein the second trained machine-learning model is selected from the plurality of machine-learning models based on the second orientation.
2. The system of clause 1, wherein the first orientation is within 15° of parallel to a direction of travel of the vehicle, and wherein the second orientation is within 15° of perpendicular to the direction of travel of the vehicle.
3. The system of clause 1 or 2, wherein the first trained machine-learning model is trained with a supervised learning process using image data collected by a camera coupled to a first auxiliary vehicle operating in an autonomous or semi-autonomous mode along a first auxiliary orientation relative to a direction of travel of the first auxiliary vehicle, wherein the first orientation relative to the direction of travel of the vehicle and the first auxiliary orientation relative to the direction of travel of the first auxiliary vehicle are substantially the same.
4. The system of any of clauses 1-3, wherein the first trained machine-learning model is trained to recognize vehicles, pedestrians, traffic signals, or signs.
5. The system of any of clauses 1-4, wherein the second trained machine-learning model is trained to recognize passing vehicles, passing cyclists, or pedestrians.
6. The system of any of clauses 1-5, wherein the first device further comprises a first memory, and wherein the first trained machine-learning model is stored within the first memory at a time of manufacture of the vehicle.
7. The system of any of clauses 1-5, wherein the first device further comprises a first memory, wherein the second device further comprises a second memory, wherein the first ASIC is further configured to receive the first trained machine-learning model from a remote computing device and store the first trained machine-learning model within the first memory, and wherein the second ASIC is further configured to receive the second trained machine-learning model from the remote computing device and store the second trained machine-learning model within the second memory.
8. The system of any of clauses 1-7, wherein the first and second trained machine-learning models are different from each other.
9. The system of any of clauses 1-8, further comprising a lidar device configured to generate lidar data indicative of distances between the vehicle and one or more objects in the surrounding environment, wherein the first ASIC is configured to apply the first trained machine-learning model to a subset of the converted first image data based on the lidar data.
10. The system of any of clauses 1-9, wherein the first device further comprises:
   a first layer of a multilayer die stack, wherein the ASIC is disposed on the first layer;
   a second layer of the multilayer die stack, wherein the second layer is positioned above and coupled to the first layer, and wherein the ADC is disposed on the second layer; and
   a third layer of the multilayer die stack, wherein the third layer is positioned above and coupled to the second layer, and wherein the first image sensor is disposed on the third layer.
11. A device comprising:
   an image sensor configured to capture image data about a surrounding environment;
   an analog-to-digital converter (ADC) configured to receive the captured image data from the image sensor and provide converted image data; and
   an application-specific integrated circuit (ASIC) configured to:
      receive the converted image data from the ADC;
      apply a trained machine-learning model to the converted image data to identify one or more objects in the surrounding environment within the converted image data; and
      output an image frame, wherein at least one row of the image frame comprises metadata including object classification data and object location data for the one or more identified objects in the surrounding environment.
12. The device of clause 11, wherein the trained machine-learning model comprises a convolutional neural network (CNN).
13. The device of clause 11 or 12, wherein the ASIC is configured to apply the trained machine-learning model to a subset of the converted image data based on lidar data indicative of distances to one or more objects in the surrounding environment.
14. The device of clause 13, wherein the object location data comprises spatial coordinates within the lidar data.
15. The device of any of clauses 11-14, wherein the object location data comprises spatial coordinates within the converted image data.
16. The device of any of clauses 11-15, wherein the object classification data comprises a determination of whether an object is a vehicle, a person, a traffic signal, or a traffic sign.
17. The device of any of clauses 11-16, further comprising:
   a first layer of a multilayer die stack, wherein the ASIC is disposed on the first layer;
   a second layer of the multilayer die stack, wherein the second layer is positioned above and coupled to the first layer, and wherein the ADC is disposed on the second layer; and
   a third layer of the multilayer die stack, wherein the third layer is positioned above and coupled to the second layer, and wherein the image sensor is disposed on the third layer.
18. A method comprising:
   capturing, by an image sensor, image data about a surrounding environment;
   receiving, by an analog-to-digital converter (ADC), the captured image data from the image sensor;
   providing, by the ADC, converted image data to an application-specific integrated circuit (ASIC);
   applying, by the ASIC, a trained machine-learning model to the converted image data to identify one or more objects in the surrounding environment within the converted image data; and
   outputting, by the ASIC, an image frame, wherein at least one row of the image frame comprises metadata including object classification data and object location data for the one or more identified objects in the surrounding environment.
19. The method of clause 18, further comprising:
   receiving, by the ASIC, an updated trained machine-learning model from a remote computing device;
   storing, by the ASIC, the updated trained machine-learning model within a memory;
   capturing, by the image sensor, additional image data about the surrounding environment;
   receiving, by the ADC, the additional captured image data from the image sensor;
   providing, by the ADC, additional converted image data to the ASIC;
   applying, by the ASIC, the updated trained machine-learning model to the additional converted image data to identify one or more additional objects in the surrounding environment within the additional converted image data; and
   outputting, by the ASIC, an additional image frame, wherein at least one row of the additional image frame comprises metadata including object classification data and object location data for the one or more additional identified objects in the surrounding environment.
20. The method of clause 18 or 19, further comprising:
   providing, by the ASIC to a central computing device, the image frame.

## Claims

1. A system comprising:
a vehicle;
a first device attached to the vehicle and along a first orientation relative to the vehicle, wherein the first device comprises:
a first image sensor configured to capture first image data about a surrounding environment;
a first analog-to-digital converter (ADC) configured to receive the captured first image data from the first image sensor and provide converted first image data; and
a first application-specific integrated circuit (ASIC) configured to:
receive the converted first image data from the first ADC; and
apply a first trained machine-learning model to the converted first image data to identify one or more first objects in the surrounding environment within the converted first image data, wherein the first trained machine-learning model is selected from a plurality of machine-learning models based on the first orientation; and
a second device attached to the vehicle and along a second orientation relative to the vehicle, wherein the first orientation and the second orientation are different, and wherein the second device comprises:
a second image sensor configured to capture second image data about the surrounding environment;
a second ADC configured to receive the captured second image data from the second image sensor and provide converted second image data; and
a second ASIC configured to:
receive the converted second image data from the second ADC; and
apply a second trained machine-learning model to the converted second image data to identify one or more second objects in the surrounding environment within the converted second image data, wherein the second trained machine-learning model is selected from the plurality of machine-learning models based on the second orientation.

2. The system of claim 1, wherein the first orientation is within 15° of parallel to a direction of travel of the vehicle, and wherein the second orientation is within 15° of perpendicular to the direction of travel of the vehicle.

3. The system of claim 1 or 2, wherein the first trained machine-learning model is trained with a supervised learning process using image data collected by a camera coupled to a first auxiliary vehicle operating in an autonomous or semi-autonomous mode along a first auxiliary orientation relative to a direction of travel of the first auxiliary vehicle, wherein the first orientation relative to the direction of travel of the vehicle and the first auxiliary orientation relative to the direction of travel of the first auxiliary vehicle are substantially the same.

4. The system of any of claims 1-3,
wherein the first trained machine-learning model is trained to recognize vehicles, pedestrians, traffic signals, or signs; and/or
wherein the second trained machine-learning model is trained to recognize passing vehicles, passing cyclists, or pedestrians.

5. The system of any of claims 1-4,
wherein the first device further comprises a first memory, and wherein the first trained machine-learning model is stored within the first memory at a time of manufacture of the vehicle.

6. The system of any of claims 1-4, wherein the first device further comprises a first memory, wherein the second device further comprises a second memory, wherein the first ASIC is further configured to receive the first trained machine-learning model from a remote computing device and store the first trained machine-learning model within the first memory, and wherein the second ASIC is further configured to receive the second trained machine-learning model from the remote computing device and store the second trained machine-learning model within the second memory.

7. The system of any of claims 1-6,
wherein the first and second trained machine-learning models are different from each other; and/or
further comprising a lidar device configured to generate lidar data indicative of distances between the vehicle and one or more objects in the surrounding environment, wherein the first ASIC is configured to apply the first trained machine-learning model to a subset of the converted first image data based on the lidar data.

8. The system of any of claims 1-7, wherein the first device further comprises:
a first layer of a multilayer die stack, wherein the ASIC is disposed on the first layer;
a second layer of the multilayer die stack, wherein the second layer is positioned above and coupled to the first layer, and wherein the ADC is disposed on the second layer; and
a third layer of the multilayer die stack, wherein the third layer is positioned above and coupled to the second layer, and wherein the first image sensor is disposed on the third layer.

9. A device comprising:
an image sensor configured to capture image data about a surrounding environment;
an analog-to-digital converter (ADC) configured to receive the captured image data from the image sensor and provide converted image data; and
an application-specific integrated circuit (ASIC) configured to:
receive the converted image data from the ADC;
apply a trained machine-learning model to the converted image data to identify one or more objects in the surrounding environment within the converted image data; and
output an image frame, wherein at least one row of the image frame comprises metadata including object classification data and object location data for the one or more identified objects in the surrounding environment.

10. The device of claim 9, wherein the trained machine-learning model comprises a convolutional neural network (CNN).

11. The device of claim 9 or 10, wherein the ASIC is configured to apply the trained machine-learning model to a subset of the converted image data based on lidar data indicative of distances to one or more objects in the surrounding environment; optionally wherein the object location data comprises spatial coordinates within the lidar data.

12. The device of any of claims 9-11,
wherein the object location data comprises spatial coordinates within the converted image data; and/or
wherein the object classification data comprises a determination of whether an object is a vehicle, a person, a traffic signal, or a traffic sign.

13. The device of any of claims 9-12, further comprising:
a first layer of a multilayer die stack, wherein the ASIC is disposed on the first layer;
a second layer of the multilayer die stack, wherein the second layer is positioned above and coupled to the first layer, and wherein the ADC is disposed on the second layer; and
a third layer of the multilayer die stack, wherein the third layer is positioned above and coupled to the second layer, and wherein the image sensor is disposed on the third layer.

14. A method comprising:
capturing, by an image sensor, image data about a surrounding environment;
receiving, by an analog-to-digital converter (ADC), the captured image data from the image sensor;
providing, by the ADC, converted image data to an application-specific integrated circuit (ASIC);
applying, by the ASIC, a trained machine-learning model to the converted image data to identify one or more objects in the surrounding environment within the converted image data; and
outputting, by the ASIC, an image frame, wherein at least one row of the image frame comprises metadata including object classification data and object location data for the one or more identified objects in the surrounding environment.

15. The method of claim 14,
further comprising:
receiving, by the ASIC, an updated trained machine-learning model from a remote computing device;
storing, by the ASIC, the updated trained machine-learning model within a memory;
capturing, by the image sensor, additional image data about the surrounding environment;
receiving, by the ADC, the additional captured image data from the image sensor;
providing, by the ADC, additional converted image data to the ASIC;
applying, by the ASIC, the updated trained machine-learning model to the additional converted image data to identify one or more additional objects in the surrounding environment within the additional converted image data; and
outputting, by the ASIC, an additional image frame, wherein at least one row of the additional image frame comprises metadata including object classification data and object location data for the one or more additional identified objects in the surrounding environment; and/or further comprising:
providing, by the ASIC to a central computing device, the image frame.
